(19) **Europäisches Patentamt**
**European Patent Office**
**Office européen des brevets**

(11) **EP 2 712 103 B1**

(12) **EUROPEAN PATENT SPECIFICATION**

(45) Date of publication and mention
of the grant of the patent:
**13.01.2016 Bulletin 2016/02**

(51) Int Cl.:
*H04J 13/00* (2011.01)     *H04J 13/16* (2011.01)
*H04B 7/06* (2006.01)     *H04L 1/06* (2006.01)
*H04B 7/04* (2006.01)

(21) Application number: **12306147.5**

(22) Date of filing: **21.09.2012**

(54) **Apparatuses, methods and computer programs for a MIMO transmitter and decoder**

Vorrichtungen, Verfahren und Computerprogramme für einen MIMO-Sender und einen MIMO-Decodierer

Appareils, procédés et programmes informatiques pour émetteur et décodeur MIMO

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**26.03.2014 Bulletin 2014/13**

(73) Proprietor: **ALCATEL LUCENT
92100 Boulogne-Billancourt (FR)**

(72) Inventors:
• **Chen, Yejian
70825 Korntal (DE)**

• **Yu, Xin
70435 Stuttgart (DE)**

(74) Representative: **Knecht, Ulrich Karl et al
Alcatel Lucent
Intellectual Property & Standards
70430 Stuttgart (DE)**

(56) References cited:
**WO-A1-2008/133439     WO-A1-2010/088665
WO-A1-2012/096609**

## Description

Embodiments of the present invention relate to data transmission, more particularly but not exclusively to data security and data detection in wireless communications.

Background

Demands for higher data rates for mobile services are steadily increasing. At the same time modem mobile communication systems as 3rd Generation systems (3G) and 4th Generation systems (4G) provide enhanced technologies, which enable higher spectral efficiencies and allow for higher data rates and cell capacities. As operators are seeking to extend the coverage and capacity of their networks advanced transmission concepts are one way forward.

Among the advanced transmission concepts there are spatial multiplexing techniques such as Multiple-Input-Multiple-Output (MIMO) concepts, which can also be combined with Multi-User (MU) detection concepts. As MU-MIMO techniques as well as Coordinated Multi-Point transmission and reception (CoMP) techniques are considered in 4G and Beyond 4G (B4G) wireless communication systems, physical layer security and user's privacy protection becomes an issue.

In current and prospectively future wireless standards MIMO techniques may provide certain degrees of freedom and may allow selecting high data throughput or high detection robustness. Furthermore, it has been recognized that secret communication within MIMO can be an important issue. A lot of efforts are made to analytically investigate the secrecy capacity region of the MIMO wiretap channel. As being practical solutions, artificial noise, beamforming techniques and precoding techniques are investigated.

Document WO2012/096609 A1 relates to methods and apparatuses that facilitate control of radio link quality of uplink MIMO transmissions. A quality difference between different encoded signals is reduced by interleaving the encoded signals over different virtual antennas in user equipment. The interleaving can be performed on different timescales and at different stages of the transmission procedure. Encoded transport blocks are interleaved over the virtual antennas to achieve a more even radio link quality between the transport blocks. Physical layer transmission of data and physical layer retransmission of the same data are carried out from different virtual antennas to reduce the quality difference between data transmitted from different virtual antennas.

Document WO2008/133439 A1 provides a method for transmitting data via multiple antennas by modulating data to be transmitted into a plurality of modulated symbols, encoding each pair of modulated symbols from said plurality of symbols in accordance with a transmission diversity to result in N by N matrices, with each N by N matrix corresponding to each pair of modulated symbols, generating an M by M code matrix comprised of the N by N matrices, orthogonally spreading the M by M code matrix to generate an output matrix, generating a plurality of row-permuted matrices by exchanging at least one pair of rows in the output matrix, and transmitting the symbols in the plurality of row-permuted matrices via a plurality of antennas by using either a space time transmission diversity, a space frequency transmission diversity, or a combination of a space time transmission diversity and a space frequency transmission diversity.

Document WO2010/088665 A1 describes systems and methodologies that facilitate cycling through precoders for transmitting wireless network communications in a time domain. The precoders can be cycled according to a precoder sequence for each data symbol transmission. When the last precoder is selected the cycle can begin again, a new precoder sequence can be received or defined, and/or the like. A precoder sequence related to a subset of precoders present in a wireless device can be defined sequentially, cyclically shifted according to an identifier or one or more communications parameters, randomly, pseudo-randomly according to an identifier or one or more communications parameters, and/or the like. In addition, the precoder sequence can be utilized to select a precoder for one or more retransmissions. Such cycling of precoders can increase transmit diversity.

Summary

Certain degrees of freedom may be provided and high data throughput or high detection robustness may be selected, cf. Foschini, G.J. and Gans, M.J.; "On limits of wireless communications in a fading environment when using multiple antennas," Wireless Personal Commun., Vol. 6, No. 3, pp. 311-335, Mar. 1998, and Alamouti, S.M.; "A simple transmit diversity technique for wireless communications," IEEE J. Select. Areas Commun., Vol. 16, No. 8, pp. 1451-1458, Oct. 1998.

Furthermore, secret communication within MIMO can be an important issue, cf. Hero, A.O.; "Secure Space-Time Communication," IEEE Trans. Inf. Theory, Vol. 49, No. 12, pp. 3235 - 3249, Dec. 2003, Wyner, A.D.; "The wire-tap channel," Bell Syst. Tech. J., Vol. 54, pp. 1355-1387, 1975, inspired by Ozarow, L.H.; Wyner, A.D.; "The wire-tap channel II," Bell Syst. Tech. J., Vol. 63, pp. 2135-2157, 1984, which introduced the so-called wiretap channel and secret communication. A lot of efforts are made to analytically investigate the secrecy capacity region of the MIMO wiretap channel, cf. Khisti, A.; Womell, G.; Wiesel, A.; Eldar, Y.; "On the Gaussian MIMO Wiretap Channel," in Proc. of IEEE Int. Symp. Inform. Theory 2007 (ISIT'07), pp. 2471-2475, Jun. 2007,

Oggier, F.; Hassibi, B.; "The Secrecy Capacity of the MIMO Wiretap Channel," in Proc. of IEEE Int. Symp. Inform. Theory 2008 (ISIT'08), pp. 524-528, Jul. 2008, and

Liu, Ruoheng; Poor, H.V.; "Secrecy Capacity Region of a Multiple-Antenna Gaussian Broadcast Channel With Confidential Messages," IEEE Trans. Inf. Theory, Vol. 55, No. 3, pp. 1235-1249, Mar. 2009.

Artificial noise, beamforming techniques and precoding techniques are investigated, cf. Goel, S.; Negi, R.; "Guaranteeing Secrecy using Artificial Noise," IEEE Trans. Wireless Commun., Vol. 7, No. 6, pp. 2180-2189, Jun. 2008,

Zhou, Xiangyun; McKay, M.R.; "Secure Transmission With Artificial Noise Over Fading Channels: Achievable Rate and Optimal Power Allocation," IEEE Trans. Veh. Technol., Vol. 59, No. 8, pp. 3831-3842, Oct. 2010,

Mukherjee, A.; Swindlehurst, A.L.; "Robust Beamforming for Security in MIMO Wiretap Channels With Imperfect CSI," IEEE Trans. Signal Process., Vol. 59, No. 1, pp. 351-361, Jan. 2011, and

Geraci, G.; Yuan, Jinhong; Collings, I.B.; "Large System Analysis of the Secrecy Sum-Rates with Regularized Channel Inversion Precoding," in Proc. of IEEE Wireless Commun. Network. Conf. 2012 (WCNC' 12), pp. 533-537, Apr. 2012.

It is a finding that a performance gap can be recognized between distributed and joint detection, and hence there may a need for a joint detection scheme, with improved physical layer security. Embodiments may therefore provide a transmission and reception scheme, which can enable MIMO joint detection, and still maintains high physical layer security. Embodiments may provide a DownLink (DL) MU-MIMO joint detection scheme with a secured physical layer. Embodiments are based on the finding that data blocks can be secured by encoding at least some of the symbols within the data block. For example, within a data block, an arbitrary user's Quadrature Amplitude Modulation (QAM) modulated signal can be protected by pseudo-randomly defined scrambling codes, in order to prevent other users from eavesdropping the whole Forward Error Correction (FEC) block. It is a further finding that the density of scrambling codes in the data block can be adjusted to balance the trade-off between improved physical layer security and a slight loss of sum rate.

Embodiments are based on the finding that an improved physical layer security can be obtained by encoding a subset of transmit symbols from a block of transmit symbols. Embodiments provide an apparatus for a transmitter of a mobile communication system, i.e. embodiments may provide said apparatus to be operated by or comprised in a transmitter. The apparatus will also be referred to as transmitter apparatus. The transmitter apparatus may be comprised in a base station transceiver or a transmission point of the mobile communication system. Embodiments also provide an apparatus for a decoder of the mobile communication system, i.e. embodiments may provide said apparatus to be operated by or comprised in a decoder. This apparatus will also be referred to as decoder apparatus. In embodiments the transmitter can be comprised in a base station transceiver and the decoder apparatus can be comprised in a joint detector being coupled to one or more mobile transceivers of the mobile communication system. In some embodiments the decoder can be comprised in a mobile transceiver.

In embodiments the transmitter apparatus and/or the decoder apparatus can be comprised in a wireless or mobile communication system. The mobile communication system may, for example, correspond to one of the mobile communication systems standardized by the 3rd Generation Partnership Project (3GPP), as Global System for Mobile Communications (GSM), Enhanced Data rates for GSM Evolution (EDGE), GSM EDGE Radio Access Network (GERAN), Universal Terrestrial Radio Access Network (UTRAN) or Evolved UTRAN (E-UTRAN), Long Term Evolution (LTE) or LTE-Advanced (LTE-A), or mobile communication systems with different standards, e.g. Worldwide Interoperability for Microwave Access (WIMAX) IEEE 802.16 or Wireless Local Area Network (WLAN) IEEE 802.11, generally any system based on Time Division Multiple Access (TDMA), Frequency Division Multiple Access (FDMA), Orthogonal Frequency Division Multiple Access (OFDMA), Code Division Multiple Access (CDMA), etc. In the following the terms mobile communication system and mobile communication network are used synonymously.

The mobile communication system may comprise a plurality of transmission points or base station transceivers operable to communicate radio signals with a mobile transceiver. In embodiments, the mobile communication system may comprise mobile transceivers and base station transceivers. A mobile transceiver may correspond to a smartphone, a cell phone, user equipment, a laptop, a notebook, a personal computer, a Personal Digital Assistant (PDA), an Universal Serial Bus (USB) -stick, a car, etc. A mobile transceiver may also be referred to as User Equipment (UE) or user in line with the 3GPP terminology. A base station transceiver can be located in the fixed or stationary part of the network or system. A base station transceiver may correspond to a remote radio head, a transmission point, an access point, a macro cell, a small cell, a micro cell, a femto cell, a metro cell etc. A base station transceiver can be a wireless interface of a wired network, which enables transmission of radio signals to a UE or mobile transceiver. Such a radio signal may comply with radio signals as, for example, standardized by 3GPP or, generally, in line with one or more of the above listed systems. Thus, a base station transceiver may correspond to a NodeB, an eNodeB, a BTS, an access point, etc.

The mobile communication system may thus be cellular. The term cell refers to a coverage area of radio services provided by a transmission point, a base station transceiver or a NodeB, an eNodeB, respectively. In some embodiments a cell may correspond to a sector. For example, sectors can be achieved using sector antennas, which provide a characteristic for covering an angular section around a base station transceiver. In some embodiments, a base station transceiver may, for example, operate three or six cells covering sectors of 120° (in case of three cells), 60° (in case of six cells) respectively. A mobile transceiver can be registered or associated with a cell, i.e. it can be associated to a cell such that data can be exchanged between the network and the mobile in the coverage area of the associated cell using a dedicated channel, link or connection.

The transmitter apparatus comprises means for composing a transmit signal. The means for composing can be implemented as a composer. In some embodiments the means for composing can be implemented in terms of a computer program and a hardware component on which the computer program is executed, such as a Digital Signal Processor (DSP) or any other processor. The means for composing may correspond to an entity, which puts together or assembles symbols, which are then processed and transmitted. For example, the means for composing may be implemented in a Digital Signal Processor (DSP), which generates complex valued symbols.

The transmit signal comprises a plurality of transmit symbols to be transmitted to a mobile transceiver. That is to say that the transmit signal may be represented as a sequence or a block of transmit symbols. Such representation can be in the base band or in the transmission band. Moreover, there can be multiple sequences of transmit symbols representing the transmit signal, e.g. when the transmit signal is transmitted using more than one transmit antenna as in a MIMO scheme. A subset of the transmit symbols is encoded using a unique code assigned to the mobile transceiver. That is to say that a unique code is assigned to the mobile transceiver, i.e. the mobile transceiver can be identified by its code, or the encoded transmit symbol can be decoded using the unique code of the mobile transceiver. The uniqueness of the code is to be understood as a code, which is not assigned to any other mobile transceiver in the proximity of the mobile transceiver considered such that ambiguities can be avoided.

The transmitter apparatus further comprises means for transmitting the transmit signal to the mobile transceiver. In embodiments, the means for transmitting may correspond to any transmitter, such as a transmitter complying with one of the above-described communication systems or standards. Hence, in embodiments, the means for transmitting may further comprise typical components of a transmitter, such as a power amplifier, filtering means, antennas, etc. In further embodiments, the transmitter may even comprise a mixer for converting the transmit symbol from a base band to a transmission band, more filters, a preamplifier, etc.

In embodiments the unique code may correspond to a scrambling code or a spreading code. A scrambling code may correspond to sequence of scrambled transmit symbols, which is assigned to the transmit symbols for them to be encoded. In some embodiments one scrambled transmit symbol may be assigned to one transmit symbol to be encoded. In other embodiments a sequence of scrambled transmit symbols may be assigned to a single transmit symbol to be encoded. In such an embodiment the code may also be referred to as spreading code as one transmit symbol to be encoded is spread across multiple transmit symbols of the scrambled transmit symbol sequence. Moreover, in embodiments the unique codes of different users may be orthogonal, such that decoding using one code reduces influences of another code in the resulting decoded signal.

The means for composing the transmit signal can be further operable to compose the transmit signal such that the transmit signal comprises transmit symbols for a plurality of mobile transceivers. That is to say that the transmit signal may be used to transmit dedicated payload data to two or more users. The transmit signal may then be composed of multiple users' payload data signals. A subset of the transmit symbols for each mobile transceiver can then be encoded using a unique code assigned to each of the plurality of mobile transceivers. In other words, for each user or mobile transceiver a different unique code may be used to encode the respective mobile transceiver specific subset of transmit symbols. In embodiments the subset of transmit symbols may comprise one or more transmit symbols. In other words, within the composed transmit signal for each mobile transceiver there are differently encoded transmit symbols.

The means for composing the transmit signal can be operable to precode the transmit signal based on a spatial precoding scheme. The means for transmitting can be operable to transmit the precoded transmit signal on a plurality of transmit antennas. That is to say the means for composing the transmit signal can be coupled to a plurality of transmit antennas. The transmit apparatus can be operable to carry out a spatial processing scheme, such as spatial multiplexing, space-time coding, any MIMO concept, etc. using the plurality of antennas.

Embodiments further provide an apparatus for a decoder of a mobile communication system, as it has been described above. The decoder apparatus comprises means for receiving a plurality of receive signals from a plurality of mobile transceivers. The means for receiving may be implemented as a receiver. The means for receiving can be operable to receive a receive signal in terms of one or more receive symbols. In embodiments the means for receiving may correspond to any receiver, for example, a receiver compliant to one of the above communication systems or communication standards. The receiver may comprise typical receiver components, such as receive antennas, low-noise amplifiers, filter circuits or filter means, etc. In further embodiments, the receiver may even comprise a mixer for converting a receive signal or symbol from the transmission band to the base band and according base band processing means. For example, the receiver may comprise a DSP for processing receive symbols in the baseband, after they have been downconverted from the transmission band and digitized.

Moreover, the decoder apparatus receives the receive signals from one or more mobile transceivers. That is to say, the mobile transceivers receive the signal from a transmit apparatus first, before the receive signal is forwarded to the decoder apparatus. Such forwarding can be achieved by any wireless or wired transmission. For example, the mobile transceivers have received the receive signals from a base station transceiver. The decoder apparatus may therefore use the mobile transceivers or their receive antennas to implement a larger MIMO system, which may also be referred to as massive MIMO system.

The decoder apparatus further comprises means for processing the plurality of receive signals based on a unique code assigned to one of the plurality of mobile transceivers. The means for processing may correspond to any processor, such as a DSP or a multi-purpose processor, on which accordingly adapted computer programs are executed. For example, the means for processing can be operable to process the plurality of receive signals by means of base band processing complex valued samples of the receive signals from the transmission band. The means for processing is further operable to determine a processed receive signal for the one mobile transceiver based on the unique code assigned to the one mobile transceiver. The processed receive signal comprises at least a subset of decoded receive symbols. Moreover, the decoder apparatus comprises means for providing the processed receive signal to the one mobile transceiver. The means for providing may correspond to a provider, such as any wired or wireless interface. In other words the decoder apparatus takes receive signals from multiple mobile transceivers and processes them. Processed receive signals are then provided back to the mobile transceivers.

That is to say receive signals of multiple mobile transceivers can be used to improve diversity gains. Mobile transceivers may exploit other receive signals from the same base station but received by other mobile transceivers to further exploit the downlink capacity in a mobile communication system. Embodiments may enable mobile transceivers, which may not be able to exploit massive MIMO alone to cooperate and therewith enable a larger MIMO system having a higher capacity than the sum capacity of the individual downlink capacities. In other words, embodiments may enable the exploitation of received signals of multiple mobile transceivers and therewith establish a MIMO system. In some embodiments an apparatus may communicate with multiple mobile transceivers, receive multiple receive signal vectors from the multiple mobile transceivers and therewith exploit the multiple receive signals as MIMO system. In other embodiments such apparatus may be comprised in a mobile transceiver station.

The plurality of receive signals can be based on a transmit signal, which comprises a plurality of transmit symbols to be transmitted to the mobile transceiver. In the transmit signal a subset of the transmit symbols is encoded using a unique code assigned to the mobile transceiver, in line with the above description. The processed receive signal comprises a combination of the receive signals from the plurality of mobile transceivers, wherein signals dedicated to other mobile transceivers than the one mobile transceiver are reduced in the processed receive signals compared to the plurality of receive signals. That is to say the processing using the unique code of the one mobile transceiver reduces the influences of signals for other mobile transceivers in the resulting signal, or the processing using the unique code of the one mobile transceiver enhances the influences of signals from said mobile transceiver as compared to signals from other mobile transceivers in the resulting signal. As has already been mentioned above the unique code may correspond to a scrambling or spreading code.

In line with the above using a spreading code may enhance the resulting signal in that parts of the signals dedicated to the mobile transceiver are combined coherently while signals parts from other mobile transceiver are combined incoherently. The unique code may correspond to one of a set of orthogonal spreading codes. The means for processing can then be operable to de-spread the plurality of receive signals using the unique code of the mobile transceiver to obtain the processed receive signal for the mobile transceiver. In further embodiments the unique code can correspond to one of a set of orthogonal scrambling codes. The means for processing may then be operable to de-scramble the plurality of receive signals using the scrambling code of the mobile transceiver to obtain the processed receive signal for the mobile transceiver.

The means for processing can be further operable to jointly detect receive symbols for each of the plurality of mobile transceivers and the means for providing can be operable to provide the detected receive symbols to the mobile transceiver as processed receive signal. For example, a Maximum A Posteriori (MAP) detector can be used for maximum likelihood detection. In further embodiments the means for processing can be further operable to jointly detect receive symbols based on the encoded transmit symbols for each of the plurality of mobile transceivers. The means for providing can then be operable to provide the detected receive symbols, which are based on the encoded transmit symbols, together with an undetected version of the un-encoded transmit symbols for the mobile transceiver to the mobile transceiver as processed receive signal. The detection of the un-encoded symbols may then be carried out by the mobile transceivers individually.

Embodiments further provide a method for a transmitter of a mobile communication system. The method comprises composing a transmit signal. The transmit signal comprises a plurality of transmit symbols to be transmitted to a mobile transceiver, wherein a subset of the transmit symbols is encoded using a unique code assigned to the mobile transceiver. The method further comprises transmitting the transmit signal to the mobile transceiver.

Embodiments further provide a method for a decoder of a mobile communication system. The method comprises receiving a plurality of receive signals from a plurality of mobile transceivers. The mobile transceivers have received the receive signals from a transmitter. The method further comprises processing the plurality of receive signals based on a unique code assigned to one of the plurality of mobile transceivers. The method further comprises determining a processed receive signal for the one mobile transceiver based on the unique code assigned to the one mobile transceiver. The processed receive signal comprises at least a subset of decoded receive symbols. The method further comprises providing the processed receive signal to the one mobile transceiver.

Moreover, embodiments provide a computer program having a program code for performing one of the above-described methods, when the computer program is executed on a computer or a processor.

Embodiments may provide the advantage that a massive MIMO concept may be enabled while still keeping the physical layer security at a high level. Embodiments may offer a trade-off between distributed processing and joint processing, balancing important factors for wireless communication, e.g. data rate and secure transmission. Embodiments may further provide the advantage of scalability, i.e. the possibility to define a factor to adjust the achievable rate and physical layer security.

Brief Description of the Figures

Some other features or aspects will be described using the following non-limiting embodiments of apparatuses and/or methods and/or computer programs by way of example only, and with reference to the accompanying Figures, in which

Fig. 1    illustrates an embodiment of a transmitter apparatus;

Fig. 2    illustrates an embodiment of a decoder apparatus;

Fig. 3    illustrates a principle of a regularized channel inversion precoder;

Fig. 4    shows simulation results of joint detection versus regularized channel inversion;

Fig. 5    shows a downlink MIMO scheme of an embodiment;

Fig. 6    shows a signal model of an embodiment;

Fig. 7    depicts a flow diagram of the signal processing in an embodiment;

Fig. 8    shows a flow diagram of an embodiment with distributed processing at user level;

Fig. 9    shows a flow diagram of an embodiment with distributed processing at joint detector level;

Fig. 10   shows simulation results of un-encoded BER versus SNR in an embodiment;

Fig. 11   shows simulation results of achievable rates versus SNR in an embodiment using $4 \times 4$ MIMO;

Fig. 12   shows simulation results of achievable rates versus SNR in an embodiment using $8 \times 8$ MIMO;

Fig. 13   shows a block diagram of an embodiment of a method for transmitting; and

Fig. 14   shows a block diagram of an embodiment of a method for transmitting.

Description of Some Embodiments

Various embodiments will now be described in more detail with reference to the accompanying drawings. In the figures, the thicknesses of lines, layers and/or regions may be exaggerated for clarity.

Accordingly, while embodiments are capable of various modifications and alternative forms, embodiments thereof are shown by way of example in the figures and will herein be described in detail. It should be understood, however, that there is no intent to limit embodiments to the particular forms disclosed, but on the contrary, embodiments are to cover all modifications, equivalents, and alternatives falling within the scope of the invention. Like numbers refer to like or similar elements throughout the description of the figures.

It will be understood that when an element is referred to as being "connected" or "coupled" to another element, it can be directly connected or coupled to the other element or intervening elements may be present. In contrast, when an element is referred to as being "directly connected" or "directly coupled" to another element, there are no intervening elements present. Other words used to describe the relationship between elements should be interpreted in a like fashion (e.g., "between" versus "directly between," "adjacent" versus "directly adjacent," etc.).

The terminology used herein is for the purpose of describing particular embodiments only and is not intended to be limiting of example embodiments. As used herein, the singular forms "a," "an" and "the" are intended to include the plural forms as well, unless the context clearly indicates otherwise. It will be further understood that the terms "comprises," "comprising," "includes" and/or "including," when used herein, specify the presence of stated features, integers, steps, operations, elements and/or components, but do not preclude the presence or addition of one or more other features, integers, steps, operations, elements, components and/or groups thereof.

Unless otherwise defined, all terms (including technical and scientific terms) used herein have the same meaning as commonly understood by one of ordinary skill in the art to which embodiments belong. It will be further understood that terms, e.g., those defined in commonly used dictionaries, should be interpreted as having a meaning that is consistent with their meaning in the context of the relevant art and will not be interpreted in an idealized or overly formal sense unless expressly so defined herein.

In the following description some components will be displayed in multiple figures carrying the same reference signs, but may not be described multiple times in detail. A detailed description of a component may then apply to that component for all its occurrences.

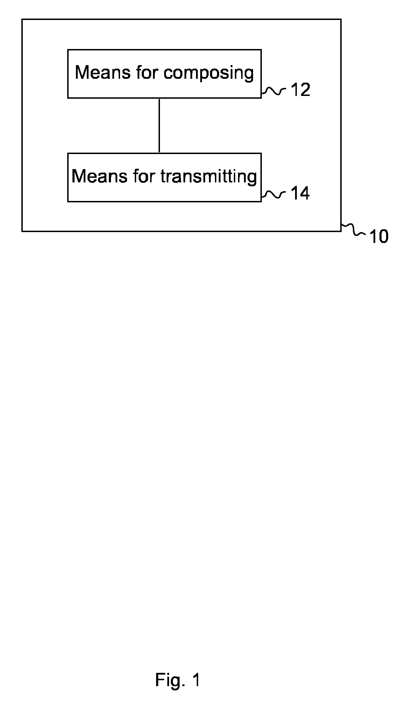

Fig. 1 shows an embodiment of a transmitter apparatus 10. The transmitter apparatus 10 is operable in a mobile communication system, which in the following can be assumed to be an LTE communication system. The transmitter apparatus 10 comprises means for composing 12 the transmit signal. The transmit signal comprises a plurality of transmit symbols to be transmitted to a mobile transceiver. A subset of the transmit symbols is encoded using a unique code assigned to the mobile transceiver. The transmitter apparatus 10 further comprises means for transmitting 14 the transmit signal to the mobile transceiver. As Fig. 1 shows, the means for composing 12 is coupled to the means for transmitting 14.

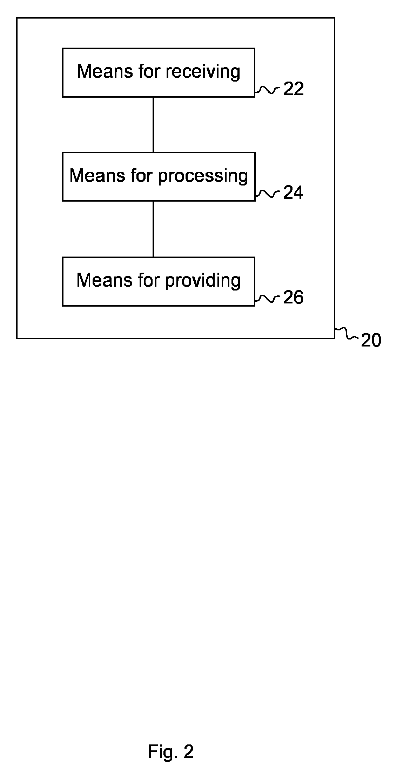

Fig. 2 illustrates an embodiment of a decoder apparatus 20. The decoder apparatus is operable in a mobile communication system, which can again be assumed to be an LTE mobile communication system. The decoder apparatus 20 comprises means for receiving 22 a plurality of receive signals from a plurality of mobile transceivers. The mobile transceivers have received the receive signal from a transmitter 10. The decoder apparatus further comprises means for processing 24 the plurality of receive signals based on a unique code assigned to one of the plurality of mobile transceivers. The means for processing 24 is operable to determine a processed receive signal for the one mobile transceiver based on the unique code assigned to the one mobile transceiver. The processed receive signal comprises at least a subset of decoded receive symbols. The means for receiving 22 is coupled to the means for processing 24. The decoder apparatus further comprises means for providing 26 the processed receive signal to the one mobile transceiver. The means for processing 24 is coupled to the means for providing 26.

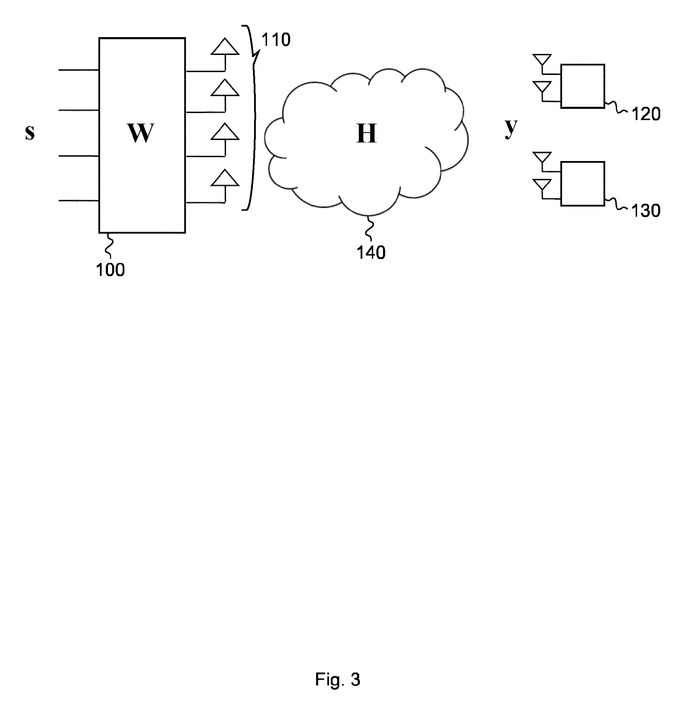

Fig. 3 illustrates a principal of a regularized channel inversion precoder. By deploying a Regularized Channel Inversion (RCI) precoding, a signal space at the receiver can be orthogonalized. Fig. 3 shows a transmitter 100 on the left hand side carrying out linear precoding. The signals are precoded using a precoding matrix **W** to be transmitted to multiple mobile transceivers 120, 130. The transmitter 100 uses a plurality of transmit antennas 110 such that the MIMO radio channel **H** 140 describes the MIMO radio channel between the multiple transmit antennas 110 and the multiple receive antennas of the multiple mobile transceivers 120 and 130. The precoding carried out at the transmitter 100 can be used to orthogonalize the signal space at the receivers 120, 130, so that each user cannot hear the other users' signal, which may fulfill the security needs from a physical layer view point. However, each antenna can only be processed in a distributed manner. In other words, even joint detection cannot be used in such a scenario to improve the performance, due to the successful or orthogonalizing precoding.

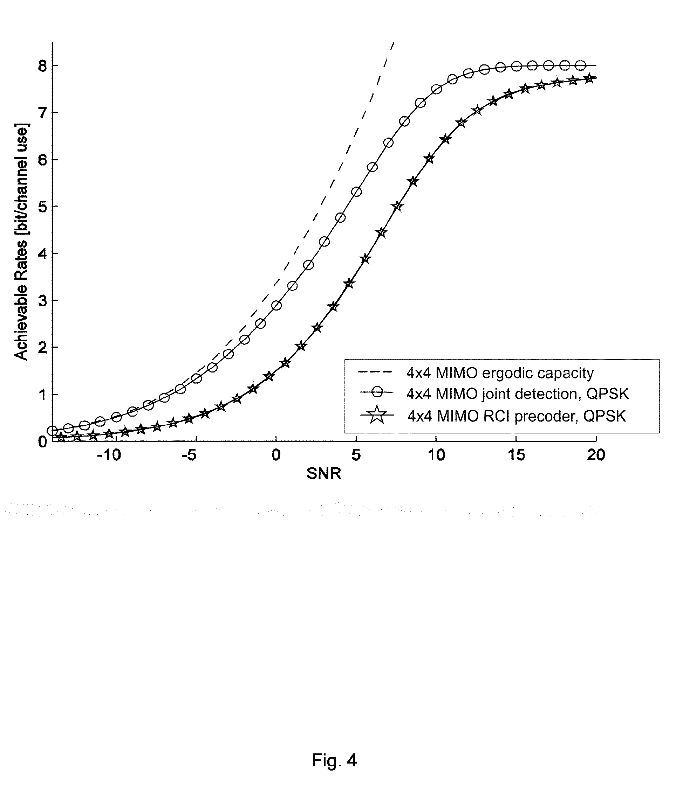

Moreover, the transmitter 100 may rely on full Channel State Information (CSI). In practice, provision of full CSI may require a large signaling overhead. This is further illustrated in Fig. 4. Fig. 4 shows simulation results of joint detection and regularized channel inversion precoding in order to determine the performance differences. The view chart in Fig. 4 shows the achievable rates in terms of bits per channel use versus the Signal-to-Noise-Ratio (SNR). In the simulation scenario a $4\times4$ MIMO system was assumed. Fig. 4 illustrates the ergodic capacity, i.e. the theoretically maximum capacity. Moreover, Fig. 4 shows the achievable capacity for joint detection using Quaternary Phase Shift Keying (QPSK), and the capacity achieved with a RCI precoder also using QPSK. From the view chart in Fig. 4 it can be seen that there is a loss in achievable data rate when RCI is used. Embodiments may provide the advantage that this performance gap between the distributed and joint detection as shown in Fig. 4 can be reduced or even closed. Embodiments may enable joint detection while still keeping a high physical layer security.

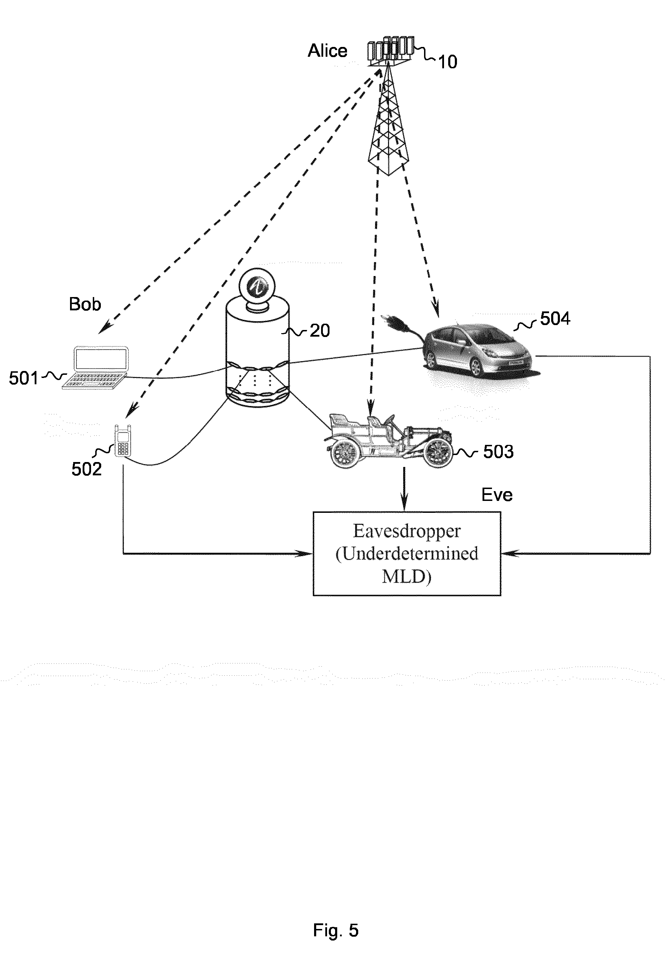

In the following downlink multiuser MIMO joint detection scheme will be described as part of an embodiment. Fig. 5 illustrates such an MIMO downlink transmission scheme. Fig. 5 shows multiple mobile transceivers 501, 502, 503, and 504, which correspond to four different users. Fig. 5 further shows a base station transceiver comprising an embodiment of the transmitter apparatus 10. In Fig. 5 the different mobile transceivers 501, 502, 503, and 504 are shown as a laptop computer, a cell phone, and two cars. This constellation corresponds to an example only. Moreover, Fig. 5 shows that the mobile transceivers 501, 502, 503, and 504 are connected to an embodiment of the decoder apparatus 20. In Fig. 5 said connection is shown as a wired connection, however, in other embodiments that connection may as well be implemented as a wireless connection. Moreover, Fig. 5 illustrates that the signals received from the transmitter apparatus 10 are forwarded to the decoder apparatus 20 by the mobile transceivers 501, 502, 503, and 504. If the signals were distributed such that each of the mobile transceivers 501, 502, 503, and 504 could carry out joint detection, eavesdropping would be enabled, which is also indicated in Fig. 5. In other words, if an underdetermined maximum likelihood detection would be used, eavesdropping could be enabled.

In Fig. 5 it is assumed that the decoder apparatus 20 receives the plurality of receive signals, which are based on the transmit signal as transmitted by the transmitter apparatus 10. The transmit signal comprises a plurality of transmit symbols to be transmitted to the mobile transceivers. Each transmit signal dedicated to a mobile transceiver comprises a subset of transmit symbols, which are encoded using a unique code assigned to the respective mobile transceiver. The code for this user or mobile transceiver can change from time to time, but for a given time instant a specific code is uniquely assigned to one user or mobile transceiver. The processed receive signal, which is provided from the decoder apparatus 20 to the mobiles 501, 502, 503, and 504 comprises a combination of the receive signals from the plurality of mobile transceivers. Moreover, it is pointed out that the processed receive signals provided to the individual mobile transceivers are different. The signals dedicated to other mobile transceivers than the one to which the processed receive signal is provided are reduced in the processed receive signals compared to the plurality of receive signals. In other words, first the decoder apparatus 20 receives the receive signals from all of the mobile transceivers 501, 502, 503, and 504. Each of the mobile transceivers receives signals for the other mobile transceivers 501, 502, 503, and 504 as well. The decoder apparatus 20 may therewith use the receive antennas and signals of the mobile stations 501, 502, 503, and 504, to establish a larger MIMO system. Based on the plurality of receive signals a processed receive signal is determined per mobile station and then provided to said mobile station. In the processed receive signal provided to each of the individual mobile stations, the respective signals of the other mobile stations are reduced.

The decoder apparatus 20 can be deployed to enable joint detection, for example, at electric automobile charging stations, which can be connected with the user terminals or mobile transceivers via cable. According to the conventional notation, Alice and Bob are the information source and desired target, respectively. The other users are the potential eavesdroppers, for instance, in Fig. 5 the worst case is illustrated. More details on the conventional notations and solutions can be found in

Goel, S.; Negi, R.; "Guaranteeing Secrecy using Artificial Noise," IEEE Trans. Wireless Commun., Vol. 7, No. 6, pp. 2180-2189, Jun. 2008,

Zhou, Xiangyun; McKay, M.R.; "Secure Transmission With Artificial Noise Over Fading Channels: Achievable Rate and Optimal Power Allocation," IEEE Trans. Veh. Technol., Vol. 59, No. 8, pp. 3831-3842, Oct. 2010,

Mukherjee, A.; Swindlehurst, A.L.; "Robust Beamforming for Security in MIMO Wiretap Channels With Imperfect CSI," IEEE Trans. Signal Process., Vol. 59, No. 1, pp. 351-361, Jan. 2011, and

Geraci, G.; Yuan, Jinhong; Collings, I.B.; "Large System Analysis of the Secrecy Sum-Rates with Regularized Channel Inversion Precoding," in Proc. of IEEE Wireless Commun. Network. Conf. 2012 (WCNC' 12), pp. 533-537, Apr. 2012.

In these proposals the CSI of the eavesdroppers desired target may be required at the base station, which may be inapplicable in practice. Furthermore, beam forming or precoding can cause further loss due to distributed processing at the receivers. Hence joint detection with a secure physical layer is desirable. In the following it will be assumed that an arbitrary user's QAM modulated signal is scrambled using a user signature. Within the data block, the scrambling codes are pseudo randomly defined for a given user. The scrambling for the users is synchronized, and the sparsity of scrambling is adjustable, according to a required security level. Nevertheless, the users may not have any information about, for example, the scrambling density or positions of scrambling symbols, which will be uniquely exchanged between the base station, i.e. the transmitter apparatus 10, and the decoder apparatus 20 enabling joint detection. For example, the selection of scrambling codes can be based on a secret algorithm, which takes a user identification as input value.

The unique code may correspond to a scrambling or a spreading code. In other words, the random or pseudorandom sequence may be used to represent one or more clear text transmit symbols of each individual user. The symbols protected by scrambling code can be detected on a user, i.e. on a mobile transceiver, basis. They can be decoded as distributed processing and the unprotected symbols may be jointly processed, to which it is also referred as a joint processing by the decoder apparatus 20.

Assuming that a data block belongs to one Forward Error Correction (FEC) block, it can be expected that Bob's data can hardly be eavesdropped without sharing the scrambling information between the users 501, 502, 503, and 504. It can also be expected that the mean scrambling rate is high enough to prevent the one user from being exhaustively eavesdropped by other users due to the astronomic number of high processes, even that the scrambling information are available to the potential eavesdroppers. In the following, numerical simulation results will be provided using a Maximum Likelihood Detector (MLD) as upper bound for distributed processing and joint processing. Additionally Bit Error Ratio (BER) performances will be analyzed with respect to the union bound. Moreover achievable rates of the proposed embodiments demonstrating the trade-off between the improved physical layer security and the slight loss of sum rate will be presented.

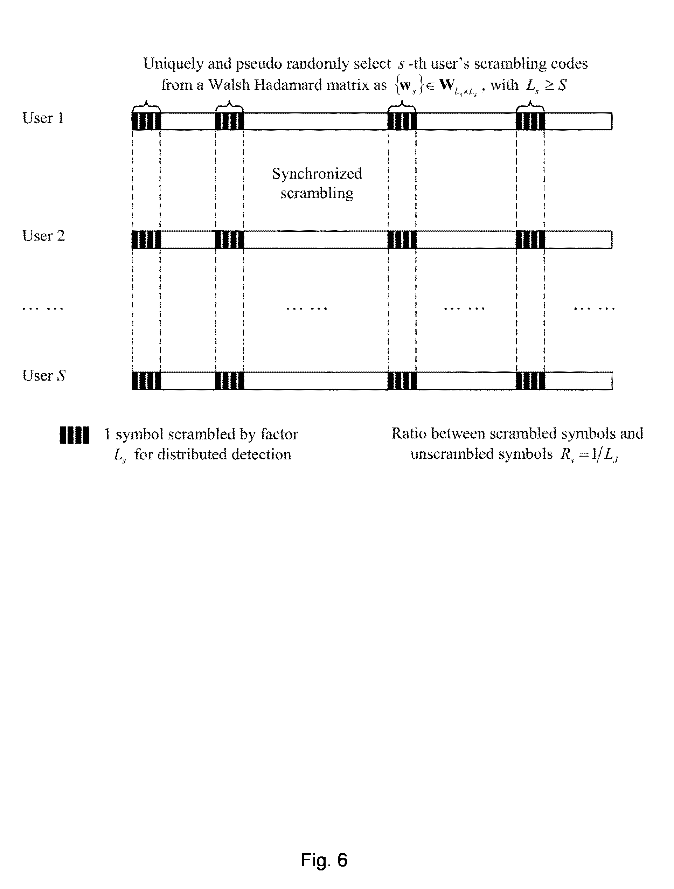

Fig. 6 illustrates a signal model in an embodiment. Fig. 6 shows multiple time lines for the transmit signals of multiple users, user 1, user 2, ..., user S. The unique codes are assumed as scrambling codes, which are represented by $\mathbf{w}_1$, $\mathbf{w}_2$, ... $\mathbf{w}_S$. Moreover it is assumed that one symbol is scrambled or spread by a factor of $L_s$ for distributed detection. That is to say that one transmit symbol of a certain user is represented by the unique code, which is represented by $L_s$ code symbols. The sequence of these $L_s$ code symbols can be followed by a sequence of $L_J$ symbols for joint detection, which would result in an embodiment using periodical insertion of the scrambled symbol. It is to be noted that in other embodiments such insertion may not be periodical. This is also shown in Fig. 6, where the inserted scrambling sections are not equidistant. After this sequence the unique code is repeated.

In other words, an MIMO system with $S$ users is considered. Each user terminal or mobile transceiver has $N_s$ receive antennas. The base station, where the transmit apparatus 10 is located, has to deploy $\sum_s N_s$ transmit antennas.

Thus, a $\sum_s N_s \times \sum_s N_s$ multi user MIMO s s s system is considered. Hence the system may use joint detection in the downlink to detect the signals of users 1, 2, ... S, i.e. mobile transceivers 501, 502, 503, and 504 in Fig. 5. As shown in Fig. 5, some of the users may utilize additional eavesdroppers to abuse the data of a certain user by deploying an underdetermined Maximum Likelihood Detector (MLD), which is the worst case but it is not negligible. In Fig. 6 the signal model of an embodiment is presented wherein a scrambled user symbol is non-periodically inserted in a synchronized manner. The scrambling code can be, for example, a Walsh Hadamard code. In other words the unique codes may be uniquely and pseudo randomly selected user scrambling codes from a Walsh Hadamard matrix as $\{\mathbf{w}_s\} \in \mathbf{W}_{L_s \times L_s}$, with $L_s \geq S$.

In other words a multiuser MIMO system with S users is considered. Each user terminal has $N_S$ receive antennas. The Base Station (BS) deploys $M_T = \sum_s N_s$ transmit antennas, yielding a $\sum_s N_s \times \sum_s N_s$ multiuser MIMO system.

In Fig. 6, the transmit frame format of s s the proposed scheme is presented. Some user symbols are sparsely scrambled in a synchronized manner with respect to scrambling factor $L_s$. The ratio between the scrambled and unscrambled symbols is denoted as $R_s = \dfrac{1}{L_J}$. The scrambling code of a specific user can be uniquely and pseudo-randomly taken from, e.g. Walsh Hadamard codes as $\mathbf{w}_1$, $\mathbf{w}_2$,...., $\mathbf{w}_S$. The MIMO system equation is given by

$$\mathbf{Y} = \mathbf{H} \cdot \begin{bmatrix} \mathbf{x}_1\mathbf{w}_1^T \\ \mathbf{x}_2\mathbf{w}_2^T \\ \vdots \\ \mathbf{x}_S\mathbf{w}_S^T \end{bmatrix} + \mathbf{N} = \underbrace{\begin{bmatrix} \mathbf{H}_1^T \\ \mathbf{H}_2^T \\ \vdots \\ \mathbf{H}_S^T \end{bmatrix}}_{\mathbf{H}} \cdot \begin{bmatrix} \mathbf{x}_1\mathbf{w}_1^T \\ \mathbf{x}_2\mathbf{w}_2^T \\ \vdots \\ \mathbf{x}_S\mathbf{w}_S^T \end{bmatrix} + \mathbf{N} \qquad (1)$$

where $\mathbf{H}$ denotes the $\sum_s N_s \times \sum_s N_s$ MIMO channel matrix, whose an arbitrary element s s $H_{ij}$ obeys complex Gaussian distribution, i.e. $H_{ij} \sim \mathcal{CN}(0,1)$, $\mathbf{H}_s$ denotes the $\sum_s N_s \times N_s$ MIMO channel sub-matrix, $\mathbf{Y}$ denotes $\sum_s N_s \times L_s$ receive matrix, $\mathbf{x}_s$ denotes the $N_S \times 1$ data vector of $s$-th user, and $\mathbf{N}$ is the $\sum_s N_s \times L_s$ Additive White Gaussian Noise (AWGN) matrix with variance $\sigma_2$. The transmit signal vector $\mathbf{x} = \begin{bmatrix} \mathbf{x}_1^T & \mathbf{x}_2^T & \dots & \mathbf{x}_S^T \end{bmatrix}^T$ satisfies the total

transmit power constraint $E_s$, i.e., $E\left[\mathbf{x}\mathbf{x}^H\right] = \left(E_s / M_T\right) \cdot \mathbf{I}_{\sum_s N_s}$.

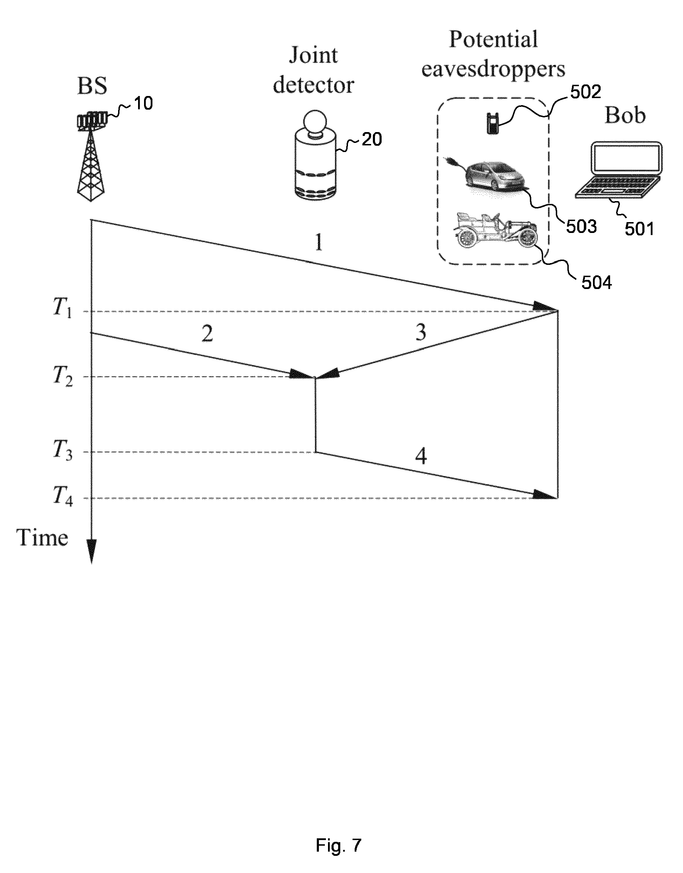

Fig. 7 illustrates a flow diagram of the signal processing in an embodiment. Fig. 7 illustrates a time line pointing from the top to the bottom. Moreover Fig. 7 illustrates the transmit apparatus 10 at the base station receiver and the decoder apparatus 20 establishing a joint detector, the mobile transceiver 501 is also referred to as Bob, who is potentially eavesdropped by mobile transceivers 502, 503, and 504. Fig. 7 shows that the signals from the transmit apparatus 10 are received at the first time instant $T_1$ by all the mobile transceivers 501 to 504. These forward the receive signals to the decoder apparatus 20. The decoder apparatus 20 further receives information on the scrambling code used, for example, also from the base station transceiver 10. This transmission can, for example, be carried out in a wireless manner. In other embodiments there may be a wired connection between the base station and the joint detector. In other embodiments both transmitter apparatus 10 and the decoder apparatus 20 may operate the same algorithm to determine the unique code, for example, based on user identification.

In the embodiment depicted in Fig. 7 the means for composing 12 the transmit signal is operable to compose the transmit signal such that the transmit signal comprises transmit symbols for the plurality of mobile transceivers 501, 502, 503, and 504. In line with what was described using Fig. 6 a subset of the transmit symbols for each mobile transceiver is encoded using a unique code assigned to each of the plurality of mobile transceivers. In other words, the code is unique per mobile transceiver. Information on the specific code can, for example, be provided from the transmit apparatus 10 to the decoder apparatus 20 by means of wireless signaling as shown in Fig. 7. Moreover, it is assumed that the unique code corresponds to one of a set of orthogonal spreading codes, for example, Walsh Hadamard scrambling codes. The means for processing 24 at the decoder apparatus 20 is operable to de-spread or de-scramble the plurality of receive signals using the spreading code of the respective mobile transceiver 501, 502, 503, and 504, to obtain the processed receive signal for the mobile transceivers 501, 502, 503, and 504. In the present embodiment it is assumed that the unique code has a spreading property, i.e. more than one code symbol is assigned to one transmit symbol of the respective mobile transceiver. In other embodiments a sole scrambling property could be assumed, i.e. a scrambled sequence of code symbols is combined with a sequence of the same length of transmit symbols of a mobile transceiver.

As mentioned above, an arbitrary scrambling code of a given user $s$ is pseudo-randomly selected from a Walsh Hadamard matrix **W**, and it is different from any of the other users' scrambling codes for a given time instant. The users do not have the knowledge of the scrambling codes, instead, the BS 10 and the joint detector 20 share the scrambling information via backhaul or common pseudo-random index generator. In Fig. 7 the flow diagram is depicted with respect to following instants.

1) $T_1$: BS 10 generates the sparsely, pseudo-randomly scrambled signal and transmits to users 501-504.

2) Not later than time instant $T_2$, BS 10 informs the joint detector 20 about the detailed scrambling information.

3) The users 501-504 forward the receive signal to the joint detector 20 at $T_3$.

4) The joint detector 20 exploits *joint processing* for the unscrambled symbols and *distributed processing* for the scramble symbols, and forwards the results to the users 501-504 at $T_4$.

Without the loss of generality, detection for the signal between Alice and Bob is considered, denoted as user 1 501. It holds

$$\mathbf{y}_1 = \mathbf{Y}\mathbf{w}_1 = \mathbf{H}_1\mathbf{x}_1 L_s + \underbrace{\sum_{s \neq 1} \mathbf{H}_s \mathbf{x}_s \mathbf{w}_s^T \mathbf{w}_1}_{\text{IUI}=0} + \underbrace{\mathbf{N}\mathbf{w}_1}_{\mathbf{n}_1}, \tag{2}$$

where $\mathbf{y}_1$ and $\mathbf{n}_1$ are $\sum_s N_s \times 1$ vectors. Equation (2) establishes a $N_s \times \sum_s N_s$ MIMO s s system, obviously with

$N_s < \sum_s N_s \cdot$ Notice that Signal-to-Noise-Ratio (SNR) in the MIMO system (2) is

$$\rho_1 = \frac{N_s}{\sum\limits_{s} N_s} \cdot \frac{E_s}{\sigma^2} = \frac{N_s}{\sum\limits_{s} N_s} \cdot \rho \qquad\qquad (3)$$

where $\rho$ stands for the MIMO system SNR, defined by $\rho = E_s/\sigma^2$. The diversity order is $\sum_{s \neq 1} N_s + 1$, if a linear detection algorithm, e.g. MMSE, is taken into account. The diversity order can be optimally $\sum\limits_{s} N_s$, if MLD is deployed.

Equation (2) corresponds to the so-called *distributed processing,* because the Inter-User Interference (IUI) are completely suppressed due to the fact $\mathbf{w}_s^T \mathbf{w}_1 = 0$ with $s \neq 1$. For the unscrambled symbols, the *joint processing* will be taken into account within a $\sum\limits_{s} N_s \times \sum\limits_{s} N_s$ MIMO system.

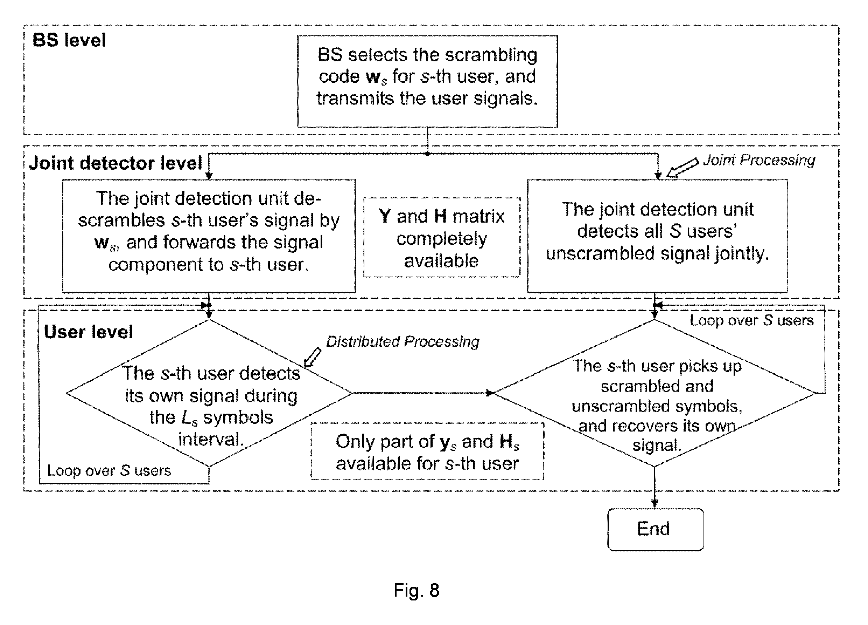

Fig. 8 shows a flow diagram of an embodiment with distributed processing at user level. In Fig. 8, a scrambling code $\mathbf{w}_s$ is used by the transmit apparatus 10 on a base station side and in the decoder apparatus 20 establishing a joint detector. As shown at the top of Fig. 8 the base station selects the scrambling code for user s and then transmits the according user signals. For example, the subset of transmit symbols, which is scrambled or encoded comprises a single transmit symbol. In other words a single transmit symbol of each user is replaced by the respective scrambling code sequence. Moreover, it is assumed that the means for composing 12 in the transmit apparatus is operable to precode the transmit signal based on a spatial precoding scheme. The means for transmitting 14 is further operable to transmit the precoded transmit signal on a plurality of transmit antennas in line with the spatial precoding scheme. The spatial precoding scheme may, for example, be spatial multiplexing or space time coding.

Fig. 8 shows two possibilities for the decoder apparatus 20 to react. According to the above equation (2), it is assumed that the matrices **Y** and **H** are completely available at the decoder apparatus 20. Some embodiments will be described in more detail in the following. The first embodiment, as shown on the left hand side of Fig. 8, considers joint detection at the decoder apparatus 20. The means for processing 24 is further operable to jointly detect receive symbols for each of the plurality of mobile transceivers 501, 502, 503, and 504. The means for providing 26 is operable to provide the detected receive symbols to the mobile transceivers as processed receive signals. In other words, the decoder apparatus descrambles the respective users signals by using the respective scrambling code $\mathbf{w}_s$, and forwards the signal component to the respective user or mobile transceiver. In this embodiment the mobile transceiver itself detects its own signal during the $L_s$ symbols interval, cf. Fig 6.

In another embodiment the means for processing 24 is operable to jointly detect receive symbols based on the encoded transmit symbols for each of the plurality of mobile transceivers. The means for providing 26 is operable to provide the detected receive symbols, which are based on the encoded transmitted symbols, together with an undetected version of the un-encoded transmit symbols for the mobile transceiver, to the mobile transceiver as processed receive signal. In other words joint detection may be carried out at the decoder apparatus 20 and all users' or mobile transceivers' signals are detected during the $\mathbf{L}_J$ symbols interval jointly. Based on the result the processed receive signals may be provided to the users. The respective user or mobile transceiver may then pick up $L_s + L_J$ symbols and recover its own signal. As indicated in Fig. 8, only $\mathbf{y}_s$ and $\mathbf{H}_s$ are available for user s, i.e. no information on the other user signal can be determined. At the user side, even the s-th user does not know its own scrambling code $\mathbf{w}_s$. Hence, physical layer security can be increased.

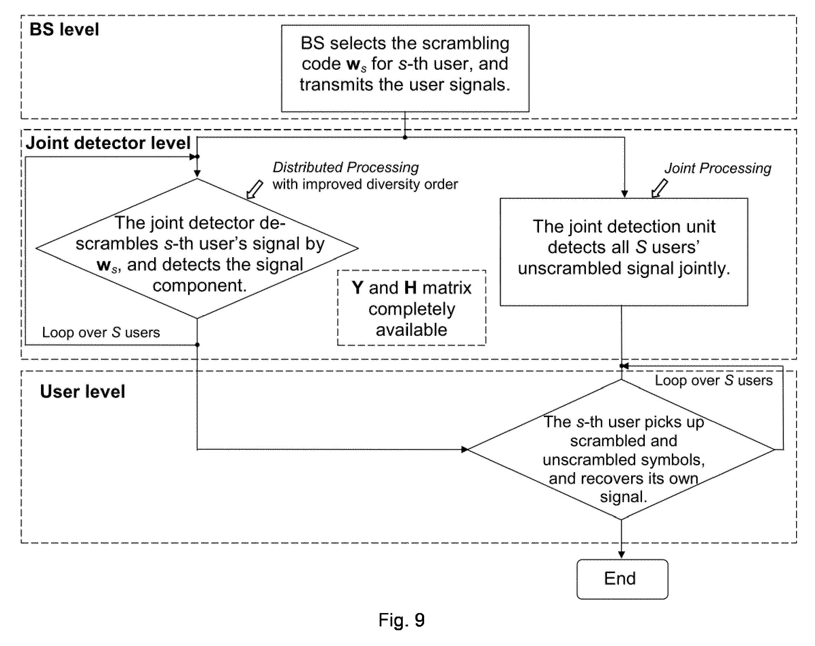

Fig. 9 shows a flow diagram of an embodiment with distributed processing at joint detector level. In Fig. 9, a scrambling code $\mathbf{w}_s$ is also used by the transmit apparatus 10 on a base station side and in the decoder apparatus 20 establishing a joint detector. As shown at the top of Fig. 9 the base station selects the scrambling code for user *s* and then transmits the according user signals. For example, the subset of transmit symbols, which is scrambled or encoded comprises a single transmit symbol. In other words a single transmit symbol of each user is replaced by the respective scrambling code sequence. Moreover, it is assumed that the means for composing 12 in the transmit apparatus is operable to precode the transmit signal based on a spatial precoding scheme. The means for transmitting 14 is further operable to transmit the precoded transmit signal on a plurality of transmit antennas in line with the spatial precoding scheme. The spatial precoding scheme may, for example, be spatial multiplexing or space time coding.

Fig. 9 shows two possibilities for the decoder apparatus 20 to react. According to the above equation (2), it is assumed that the matrices **Y** and **H** are completely available at the decoder apparatus 20. One embodiment, as shown on the left hand side of Fig. 8, considers joint detection at the decoder apparatus 20. The means for processing 24 is further operable to jointly detect receive symbols for each of the plurality of mobile transceivers 501, 502, 503, and 504. The means for providing 26 is operable to provide the detected receive symbols to the mobile transceivers as processed receive signals. In other words, the decoder apparatus 20 descrambles the respective users signals by using the respective scrambling code $\mathbf{w}_s$, and forwards the signal component to the respective user or mobile transceiver. In this embodiment the s-th mobile transceiver picks up scrambled and unscrambled symbols, and recovers its own signal.

In another embodiment, as shown on the right hand side of the decoder level in Fig. 9, the means for processing 24 is operable to jointly detect receive symbols based on the encoded transmit symbols for each of the plurality of mobile transceivers, i.e. for all S users. For each user an unscrambled signal is detected jointly. The means for providing 26 is operable to provide the detected receive symbols, which are based on the encoded transmitted symbols, together with an undetected version of the un-encoded transmit symbols for the mobile transceiver, to the mobile transceiver as processed receive signal. In other words joint detection may be carried out at the decoder apparatus 20 and all users' or mobile transceivers' signals are detected during the $\mathbf{L}_J$ symbols interval jointly. Based on the result the processed receive signals may be provided to the users. The respective user or mobile transceiver may then pick up scrambled and unscrambled symbols and recover its own signal.

For the $L_J$ symbols, MIMO joint detection can still be taken into account, either with linear detection or MLD. As a matter of fact, the improved diversity order and physical layer security comes at the cost of reduced data rate. Obviously, the effective data rate is

$$R_d = \frac{1 + L_J}{L_s + L_J}.$$

The signal model described above is able to enhance the physical layer security. Firstly, the users may not have any information about the scrambling, e.g. the number of scrambled symbols $L_s$, the scrambling ratio $R_s$ or where the scrambled symbols are located within a data frame. Secondly, even if the scrambling information is available for potential eavesdropper, it is still difficult for him to eavesdrop s-th user's signal, because the corresponding scrambling codes $\{\mathbf{w}_s\}$ used by user s are pseudo-randomly picked out from the Walsh Hadamard matrix $\mathbf{W}$. Nevertheless, as depicted in Fig. 5, the worst case is that S-1 users eavesdrop one user. In order to protect this user, the artificial noise can be introduced as

$$\mathbf{Y} = \mathbf{H}_1 \left( \sqrt{E_{x_1} - \sum_{i=0}^{I-1} E_{u_i}} \cdot \mathbf{x}_1 \mathbf{w}_1^T + \sum_{i=0}^{I-1} \sqrt{E_{u_i}} \cdot \mathbf{u}_i \mathbf{w}_{L_s-i}^T \right) + \sum_{s\neq 1} \mathbf{H}_s \mathbf{x}_s \mathbf{w}_s^T + \mathbf{N} \qquad (4)$$

where $I$ denotes the number of artificial noise $\mathbf{u}_i$ with $L_s - S \geq I$. The artificial noise can be exploited especially for high SNR values, as an additional degree of freedom to enhance the physical layer security.

The MLD algorithm in an embodiment jointly detects the $M_T$ transmit data streams, considering the conditional Probability Density Function (PDF)

$$p(\mathbf{y} / \mathbf{a}) = \left( \frac{1}{\pi\sigma^2} \right)^{M_T} \exp\left( -\frac{\|\mathbf{y} - \mathbf{Ga}\|^2}{\sigma^2} \right) \qquad (5)$$

Where $\mathbf{a} = [a_1 a_2 ... a_{M_T}]^T$ denotes an arbitrary detection symbol vector candidate, $\mathbf{G}$ denotes the effective $M_R \times M_T$ MIMO channel matrix. Let $B$ denote the set of constellation symbols, with $\{a_1, a_2, ..., a_{M_T}\} \subset B$. The Log-Likelihood-Ratio (LLR) of the $j$-th bit in the $k$-th transmit data stream can then be computed as

$$\mathrm{LLR}_{[\mathbf{y}]_k}^{(j)} = \ln \left[ \frac{\sum_{\mathbf{a}:[\mathbf{a}]_k \in B_{j,k}^1} \exp\left(-\frac{\|\mathbf{y} - \mathbf{Ga}\|^2}{\sigma^2}\right)}{\sum_{\mathbf{a}:[\mathbf{a}]_k \in B_{j,k}^0} \exp\left(-\frac{\|\mathbf{y} - \mathbf{Ga}\|^2}{\sigma^2}\right)} \right] \qquad (6)$$

where $B_{j,k}^1$ and $B_{j,k}^0$ denote the subsets of the constellation candidates of the *k*-th data stream whose *j*-th bit is 1 and 0, respectively.

Point-to-point link layer simulations were performed for the embodiments under consideration. One figure of merit is the corresponding gap to the optimum performance. The capacity of the ergodic $M_R \times M_T$ MIMO channel is provided as

$$C = E\left[\log_2\left|\mathbf{I}_{M_R} + \frac{\rho}{M_T}\mathbf{G}\mathbf{G}^H\right|\right] \qquad (7)$$

Bit-wise mutual information of an equivalent bit-channel can be computed to quantify the remaining gap to capacity, cf. Cover, T.M.; Thomas, J.A.; "Elements of Information Theory, 2nd ed.,"Wiley-Interscience, New York, Jul. 2006.

Let $p\,(\ell\,/\,X = 0)$ and $p(\ell\,/\,X =1)$ denote the PDF of the LLR values under the condition that bits $X = 0,1$ are transmitted respectively. For the *k*-th transmit stream, the bit-wise mutual information can then be computed as

$$I(S;Z) = \frac{1}{2}\sum_{b=0,1}\int_{-\infty}^{\infty} p(\ell\,/\,X=b)\log_2\frac{2p(\ell\,/\,X=b)}{\sum_{c=0,1} p(\ell\,/\,X=c)}d\ell\ . \qquad (8)$$

With S being a random variable describing $[\mathbf{s}]_k$, and Z describing the *k*-th signal stream $[\mathbf{z}]_k$. after detection, respectively.

MLD can be adopted for both *distributed processing* and *joint processing,* in order to present the optimum performance for the proposed algorithm. Firstly, the error probability analysis for MLD generally is reviewed, cf. Zhu, Xu; Murch, R.D.; "Performance Analysis of Maximum Likelihood Detection in a MIMO Antenna System," IEEE Trans. Commun., Vol. 50, No. 2, pp. 187-191, Feb. 2002.

Let $\{a_m\}$ denote the set of all *M* candidate symbols transmitted by a transmit antenna. The set $\{\mathbf{a}\}$ stands for all $M^{M_T}$ candidate symbol vectors. Furthermore, let's define $\{\mathbf{a}_i\}$ as a subset of $\{\mathbf{a}\}$ in which vectors have a same symbol $a_m$ at a given transmit antenna, and define $\{\mathbf{a}_j\}$ as a subset of $\{\mathbf{a}\}$ in which vectors have symbols different from $a_m$ at the transmit antenna. The pairwise error probability $P_{a_m,ij}$ can be computed as

$$P_{a_{m,ij}} = \Pr(D_{ij} < 0\,/\,a_m,\mathbf{a}_j) = \int_{-\infty}^{0} p(D_{ij})dD_{ij} \qquad (9)$$

where the distance metric is $D_{ij}=\|\mathbf{y}\text{-}\mathbf{H}\mathbf{a}_i\|^2\text{-}\|\mathbf{y}\text{-}\mathbf{H}\mathbf{a}_j\|^2$. For the receiver with perfect channel information, a closed-form expression of $P_{a_m,ij}$ is derived as

$$P_{a_{m,ij}} = \left(1+r_{a_{m,ij}}\right)^{1-2M_R}\sum_{l=1}^{M_R}\binom{2M_R-1}{l}r_{a_{m,ij}}^l \qquad (10)$$

with $r_{a_{m,ij}} = L_{a_{m,ij}}\gamma +1+\sqrt{\left(L_{a_{m,ij}}\gamma\right)^2 + L_{a_{m,ij}}\gamma}$ and $L_{a_{m,ij}} = \left\|\mathbf{d}_i - \mathbf{d}_j\right\|^2 M_T\,/\,2E_s$, where $\gamma = \dfrac{E_s}{\sigma^2}\cdot\dfrac{1}{M_T}$

denotes average SNR per diversity branch. The union bound of Symbol Error Ratio (SER) is thus

$$P_s \leq M^{-M_T}\sum_{m,i,j} P_{a_{m,ij}}\ . \qquad (11)$$

For high SNR, the asymptotic union bound can be expressed as

$$P_{s,asymp} = M^{-M_T}\left(\frac{1}{2\gamma}\right)^{M_R}\binom{2M_R-1}{M_R-1}\sum_{m,i,j} L_{a_{m,ij}}^{-M_R} . \tag{12}$$

With respect to the detection scheme for the *joint processing* and *distributed processing* parts, the SER can be straightforwardly obtained by considering (10)-(12) above and corresponding orders of MIMO systems, respectively. It yields

$$P_{s,\text{joint}} = P_s(M_T = M_R = \sum_s N_s, \gamma = \frac{\rho}{\sum_s N_s}) , \tag{13a}$$

$$P_{s,distr} = P_s\left(M_T = N_s, M_R = \sum_s N_s, \gamma = \frac{\rho_1}{N_s}\right) . \tag{13b}$$

The ratio between the scrambled and unscrambled symbols $R_s = \dfrac{1}{L_J}$ indicates that the probabilities of the executed *distributed processing* and *joint processing* are $\dfrac{R_s}{1+R_s}$ and $\dfrac{1}{1+R_s}$, respectively. Therefore, the overall SER is

$$SER\left(\frac{E_s}{\sigma^2}\right) = \frac{1}{1+R_s}P_{s,\text{joint}} + \frac{R_s}{1+R_s}P_{s,distr} . \tag{14}$$

By considering Gray de-mapping, the corresponding BER can be approximated as

$$BER\left(\frac{E_s}{\sigma^2}\right) = \frac{SER\left(\frac{E_s}{\sigma^2}\right)}{\log_2 M} . \tag{15}$$

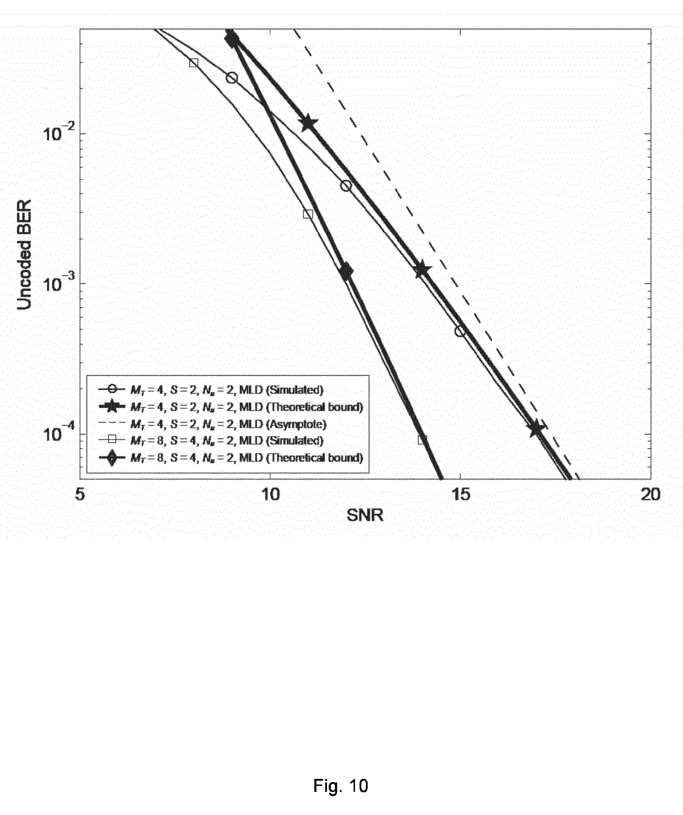

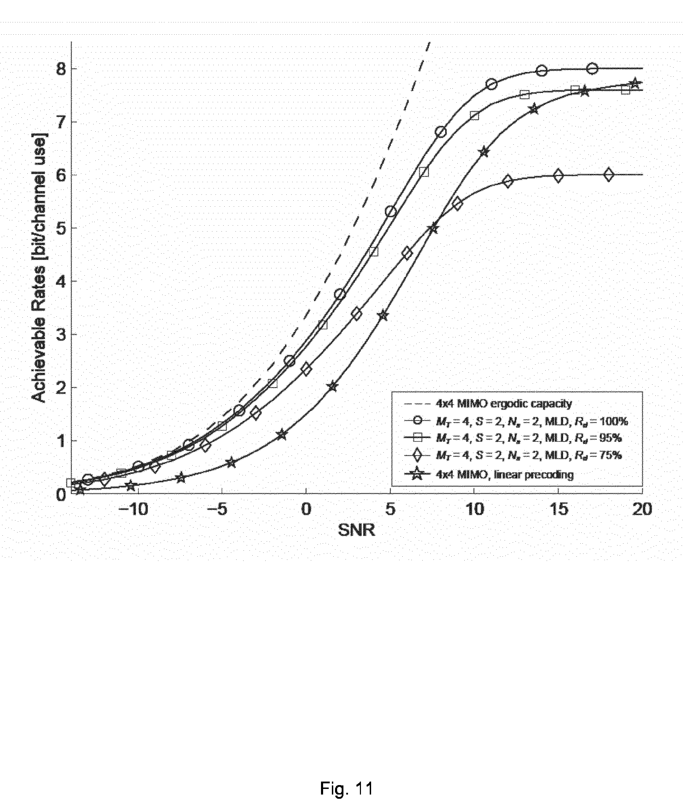

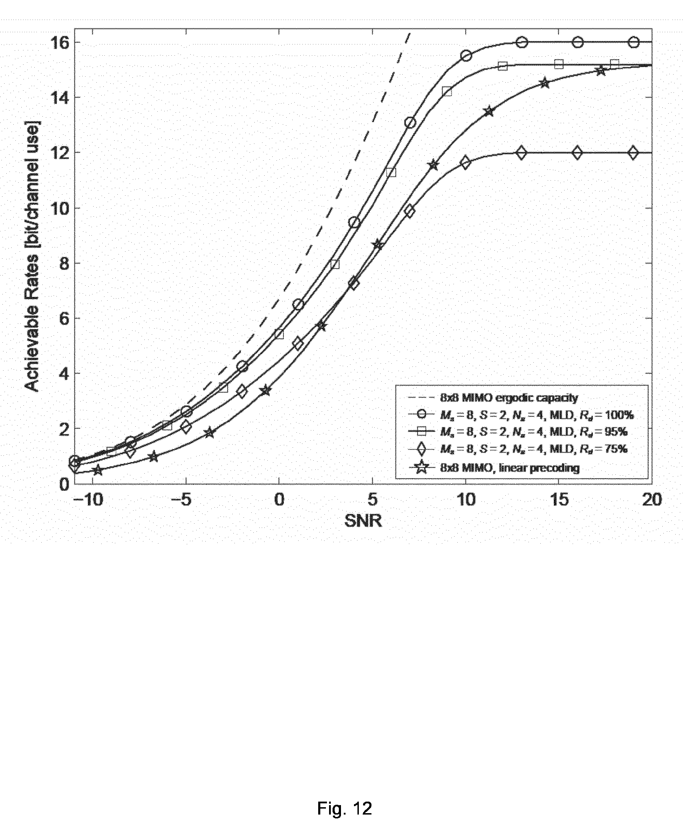

In the following simulation results will be presented. Fig. 10 shows simulation results of un-encoded block error rates versus SNR in an embodiment. In Fig. 10 the un-encoded BER versus SNR is presented for 4×4 and 8×8 MIMO with MLD. In Fig. 11 and 12 the achievable rates versus SNR are provided for 4×4 and 8×8 MIMO systems.

Point-to-point link level simulations are carried out to evaluate the performance of the embodiments. As figures of merit, the BER as a performance indicator for an un-encoded system, as well as the mutual information (achievable rate) of the equivalent bit channel to judge on the quality of LLR soft output for use in a code system are used. Furthermore, focus will be on the security issue with respect to the worst case, namely demonstrating how unlikely *S*-1 users manage to eavesdrop a single user within the multiuser MIMO system.

The link level simulation parameters are summarized in the following table:

| Modulation scheme | QPSK with Gray labeling |
|---|---|
| TX antennas/streams $M_T$ | 4 or 8 |
| Number of users $S$ | 2 or 4 |
| RX antennas/streams per user $N_S$ | 2 |
| Scrambling factor $L_S$ | 4 or 8 |

(continued)

| Modulation scheme | QPSK with Gray labeling |
|---|---|
| Effective data rate $R_d = \dfrac{1 + L_J}{L_s + L_J}$ | 75% or 95% |
| Channel entries | i.i.d. complex Gaussian RVs |
| Channel knowledge at receiver | Perfectly known |
| Detection algorithms | 1. Full *joint processing* $M_T \times (N_s S)$ MLD<br>2. *Distributed processing* $N_s \times (N_s S)$ MLD |

Considering the multiuser peak achievable sum-rate $C_s$, it holds

$$C_s = M_T \log_2 M \cdot R_d = M_T \log_2 M \cdot \frac{1 + L_J}{L_s + L_J} \qquad (16)$$

where $R_d = \dfrac{1 + L_J}{L_s + L_J}$ denotes the effective data rate, due to introducing $L_s$ -1 additional scrambled symbols. In the following effective data rate $R_d$ as 75% and 95 % are considered. In Fig. 10 the encoded BER versus SNR is presented for 4×4 and 8×8 MIMO with MLD. The corresponding high SNR asymptotic loose bound and the close union bound are provided as well, according to the analysis above.

In Fig. 11 and Fig. 12 the achievable rates versus SNR are provided for 4×4 and 8×8 MIMO system, respectively. First of all, the performance gap between the secure linear precoding and the full MLD based joint detection can clearly be observed without any physical layer protection mechanism, namely $R_d$=100%. $S$ users are considered in the multiuser MIMO system, and $L_s$ possible scrambling codes are adopted to protect the physical layer security. As mentioned, focus lies on effective data rates considering $R_d$ = 75% and $R_d$ = 95%. The loss of effective data rate comes at the cost of increased physical layer security.

In Fig. 11 it can be noticed that the proposed MIMO detection schemes outperform the secure linear precoding at low SNR regions and the scheme with effective data rate $R_d$ = 95% can very closely approach the upper bound, namely insecure joint detection with effective data rate $R_d$ = 100%. In Fig. 12, basically the same effect as in Fig. 11 can be observed. Furthermore, performance secure linear precoding is relatively improved as can be noticed from the figures. Nevertheless, additional overhead has to be paid for the perfect CSI at the transmitter, which is hardly affordable in practice.

In order to further address the issue of the secure layer security, a 4×4 multiuser MIMO scenario for two users each using two receive antennas is examined. As a scrambling code length $L_s$ = 4 is selected. Fig. 11 displays the simulation results with respect to the achievable rates versus the SNR, which were achieved with $L_J$ = 8 and $L_J$ = 56, respectively.

For the case $L_J$ = 8 , and $L_s$ = 4 for two users and two transmit antennas the effective rate $R_d$ = 75% according to the above equation. The peak achievable rate for a 4×4 MIMO with a QPSK is thus 6bit per channel use. In Fig. 11 one can observe certain performance enhancements at low SNR and low code rate, comparing to an RCI precoder. Moreover an affective code block with 1000 bits is assumed for QPSK 500 symbols result. Approximately 55 scrambled symbols need to be inserted. In the two-user scenario, if user 2 tries to eavesdrop the data of user 1, user 2 would have to try all possible $L_s$ scrambling codes exhaustively. Therefore, for the 55 inserted scrambled symbols, the number of candidates $K$ are

$$K = L_s^{55} = 4^{55} = 1.2981 \times 10^{33}.$$

If the scrambling codes adapted by user 1 and user 2 are pseudo-randomly taken from the $L_s$ = 4 scrambling codes. The astronomical value $K$ can guarantee high physical layer security.

In the second case where $L_J = 56$, $L_s = 4$ for two users and two antennas each, the effective rate is $R_d = 95\%$, according to the above equation. The peak achievable rate for $4\times4$ MIMO with QPSK is 7.6 bits per channel use. In Fig. 11, one can observe that the optimum performance may be approached. Moreover, if an effective code block with 1000 bits is assumed, for QPSK 500 symbols result. Approximately nine scrambled symbols need to be inserted. For the nine inserted scrambled symbols, the number of candidates $K$ are

$$K = L_s^9 = 4^9 = 262144 \ .$$

The search space would then still be very huge for user 2 to eavesdrop.

As described above the users do not have knowledge of pseudo-random scrambling, e.g. the position of the scrambled symbols, the exploited scrambling codes, and scrambling ratio $R_s$. Therefore, basically the introduced embodiments as joint detector 20 in Fig. 5 and Fig. 6 may already guarantee high physical layer security. The worst case is depicted in Fig. 5, namely $S$-1 users eavesdropping one single user, and the prerequisite for eavesdropping can be relaxed by assuming that $S$-1 eavesdroppers are able to identify the position of scrambled symbols as well as the scrambling factor $L_s$. The eavesdroppers may not have the pseudo-random generator (as BS 10 and joint detector 20) for temporal scrambling codes. A FEC block of the victim user can be assumed to have 1500 bits, which corresponds to 750 QPSK symbols. If the scrambling factor $L_s$ and the scrambled symbols can be identified, the $S$-1 eavesdroppers have to then exhaustively hypothesize the pseudo-random scrambling code sequence of the victim user, in order to decode this FEC block. Notice that the $S$-1 eavesdroppers establish an under-determined $M_T\times(N_sS-N_s)$ MIMO system.

This corresponds to detection complexity and loss of performance. In the following table the number of hypotheses for the $S$-1 users exploiting exhaustive eavesdropping is summarized. Generally, note that the numbers are huge enough to guarantee the physical layer security. On the other side, deploying high effective data rate e.g. $R_d = 95\%$ can relatively cause the degradation of physical layer security. Thus, the predetermined scrambling information via backhaul or common pseudo-random index generation algorithm should be strictly kept known and only known by BS and the joint detector.

| | $M_T \times \left(N_s \cdot S\right)$ MIMO with $N_s = 2$ |
|---|---|
| $L_s = 4, S = 2, R_d = 75\%$ | $9.35\times10^{49}$ |
| $L_s = 4, S = 2, R_d = 95\%$ | $1.68\times10^7$ |
| $L_s = 8, S = 4, R_d = 75\%$ | $3.25\times10^{32}$ |
| $L_s = 8, S = 4, R_d = 95\%$ | $2.62\times10^5$ |

From the view point of downlink physical layer security, the system should try to possibly separate the users and exploit the distributed processing by introducing robust beamforming or precoding technique. On the other side, the performance enhancement achieved by joint detection cannot be neglected. Embodiments may provide a downlink multiuser MIMO joint detection scheme with enhanced physical layer security. It provides an additional degree of freedom to increase or decrease the data security, by adjusting the target sum-rate.

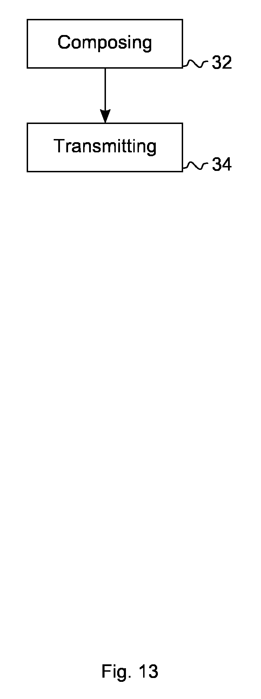

Fig. 13 shows a block diagram of an embodiment of a method for transmitting. The method can for example be carried out at the transmitter 10 of a mobile communication system, such as a base station. The method comprises a step of composing 32 a transmit signal. The transmit signal comprises a plurality of transmit symbols to be transmitted to a mobile transceiver. A subset of the transmit symbols is encoded using a unique code assigned to the mobile transceiver. The method further comprises a step of transmitting 34 the transmit signal to the mobile transceiver.

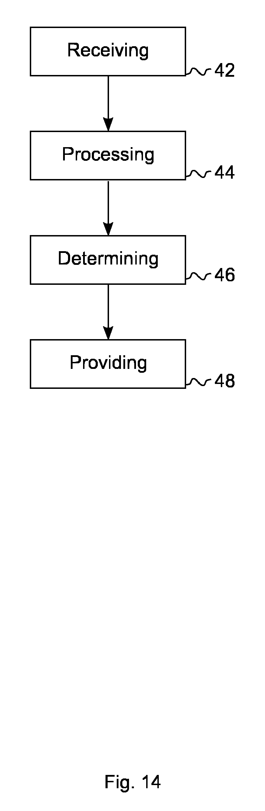

Fig. 14 shows a block diagram of an embodiment of the method for a decoder 20 of a mobile communication system. The method comprises a step of receiving 42 a plurality of receive signals from a plurality of mobile transceivers, the mobile transceivers having received the receive signals from a transmitter. The method further comprises a step of processing 44 the plurality of receive signals based on a unique code assigned to one of the plurality of mobile transceivers. The method further comprises a step of determining 46 a processed receive signal for the one mobile transceiver based one the unique code assigned to the one mobile transceiver. The processed receive signal comprises at least a subset of decoded receive symbols. The method further comprises a step of providing 48 a process receive signal to the one mobile transceiver.

Further embodiments provide a computer program having a program code for performing one of the above methods when the computer program is executed on a computer or processor.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as magnetic disks and magnetic tapes, hard drives, or optically readable digital data storage media. The embodiments are also intended to cover computers programmed to perform said steps of the above-described methods or (field) programmable logic arrays ((F)PLAs) or (field) programmable gate arrays ((F)PGAs), programmed to perform said steps of the above-described methods.

The description and drawings merely illustrate the principles of the invention. It will thus be appreciated that those skilled in the art will be able to devise various arrangements that, although not explicitly described or shown herein, embody the principles of the invention and are included within its spirit and scope. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof.

Functional blocks denoted as "means for ..." (performing a certain function) shall be understood as functional blocks comprising circuitry that is adapted for performing or to perform a certain function, respectively. Hence, a "means for s.th." may as well be understood as a "means being adapted or suited for s.th.". A means being adapted for performing a certain function does, hence, not imply that such means necessarily is performing said function (at a given time instant).

The functions of the various elements shown in the Figures, including any functional blocks labeled as "means", "means for composing", "means for transmitting", "means for receiving", "means for processing", "means for providing" etc., may be provided through the use of dedicated hardware, such as "a composer", "a transmitter" , "a receiver" , "a processor", "a provider", etc. as well as hardware capable of executing software in association with appropriate software. Moreover, any entity described herein as "means", may correspond to or be implemented as "one or more modules", "one or more devices", "one or more units", etc. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the Figures are conceptual only. Their function may be carried out through the operation of program logic, through dedicated logic, through the interaction of program control and dedicated logic, or even manually, the particular technique being selectable by the implementer as more specifically understood from the context.

It should be appreciated by those skilled in the art that any block diagrams herein represent conceptual views of illustrative circuitry embodying the principles of the invention. Similarly, it will be appreciated that any flow charts, flow diagrams, state transition diagrams, pseudo code, and the like represent various processes which may be substantially represented in computer readable medium and so executed by a computer or processor, whether or not such computer or processor is explicitly shown.

**Claims**

1.  An apparatus (10) for a transmitter of a mobile communication system, the apparatus (10) comprising
    means for composing (12) a transmit signal, the transmit signal comprising a plurality of transmit symbols to be transmitted to a mobile transceiver, wherein a subset of the transmit symbols is encoded using a unique code assigned to the mobile transceiver;
    means for transmitting (14) the transmit signal to the mobile transceiver.

2.  The apparatus (10) of claim 1, wherein the unique code corresponds to a scrambling code or a spreading code.

3.  The apparatus (10) of claim 1, wherein the means for composing (12) the transmit signal is operable to compose the transmit signal such that the transmit signal comprises transmit symbols for a plurality of mobile transceivers, wherein a subset of the transmit symbols for each mobile transceiver is encoded using a unique code assigned to each of the plurality of mobile transceivers.

4.  The apparatus (10) of claim 1, wherein the subset of transmit symbols comprises one transmit symbol.

5. The apparatus (10) of claim 2, wherein the means for composing (12) the transmit signal is operable to precode the transmit signal based on a spatial precoding scheme, and wherein the means for transmitting (14) is operable to transmit the precoded transmit signal on a plurality of transmit antennas.

6. An apparatus (20) for a decoder of a mobile communication system, the apparatus (20) comprising
means for receiving (22) a plurality of receive signals from a plurality of mobile transceivers, the mobile transceivers having received the receive signals from a transmitter;
means for processing (24) the plurality of receive signals based on a unique code assigned to one of the plurality of mobile transceivers, the means for processing (24) being operable to determine a processed receive signal for the one mobile transceiver based on the unique code assigned to the one mobile transceiver, the processed receive signal comprising at least a subset of decoded receive symbols; and
means for providing (26) the processed receive signal to the one mobile transceiver.

7. The apparatus (20) of claim 6, wherein the plurality of receive signals is based on a transmit signal, the transmit signal comprising a plurality of transmit symbols to be transmitted to the mobile transceiver, wherein a subset of the transmit symbols is encoded using a unique code assigned to the mobile transceiver, wherein the processed receive signal comprises a combination of the receive signals from the plurality of mobile transceivers, wherein signals dedicated to other mobile transceivers than the one mobile transceiver are reduced in the processed receive signals compared to the plurality of receive signals.

8. The apparatus (20) of claim 6, wherein the unique code corresponds to a scrambling or spreading code.

9. The apparatus (20) of claim 6, wherein the unique code corresponds to one of a set of orthogonal spreading codes, and wherein the means for processing (24) is operable to de-spread the plurality of receive signals using the spreading code of the mobile transceiver to obtain the processed receive signal for the mobile transceiver.

10. The apparatus (20) of claim 6, wherein the unique code corresponds to one of a set of orthogonal scrambling codes, and wherein the means for processing (24) is operable to de-scramble the plurality of receive signals using the scrambling code of the mobile transceiver to obtain the processed receive signal for the mobile transceiver.

11. The apparatus (20) of claim 6, wherein the means for processing (24) is further operable to jointly detect receive symbols for each of the plurality of mobile transceivers and the means for providing (26) is operable to provide the detected receive symbols to the mobile transceiver as processed receive signal.

12. The apparatus (20) of claim 6, wherein the means for processing (24) is further operable to jointly detect receive symbols based on the encoded transmit symbols for each of the plurality of mobile transceivers and wherein the means for providing (26) is operable to provide the detected receive symbols, which are based on the encoded transmit symbols, together with an undetected version of the unencoded transmit symbols for the mobile transceiver to the mobile transceiver as processed receive signal.

13. A method for a transmitter of a mobile communication system, the method comprising
composing (32) a transmit signal, the transmit signal comprising a plurality of transmit symbols to be transmitted to a mobile transceiver, wherein a subset of the transmit symbols is encoded using a unique code assigned to the mobile transceiver;
transmitting (34) the transmit signal to the mobile transceiver.

14. A method for a decoder of a mobile communication system, the method comprising
receiving (42) a plurality of receive signals from a plurality of mobile transceivers, the mobile transceivers having received the receive signals from a transmitter; processing (44) the plurality of receive signals based on a unique code assigned to one of the plurality of mobile transceivers;
determining (46) a processed receive signal for the one mobile transceiver based on the unique code assigned to the one mobile transceiver, the processed receive signal comprising at least a subset of decoded receive symbols; and
providing (48) the processed receive signal to the one mobile transceiver.

15. A computer program having a program code for performing one of the methods of claims 13 or 14, when the computer program is executed on a computer or processor.

**Patentansprüche**

1. Vorrichtung (10) für einen Sender eines Mobilkommunikationssystems, wobei die Vorrichtung (10) Folgendes umfasst:

   Mittel zum Bilden (12) eines Sendesignals, wobei das Sendesignal eine Vielzahl von Sendesymbolen umfasst, die an ein mobiles Sende-/Empfangsgerät zu senden sind, wobei ein Teilsatz der Sendesymbole codiert wird durch Verwenden eines eindeutigen Codes, der dem mobilen Sende-/Empfangsgerät zugeordnet ist;
   Mittel zum Senden (14) des Sendesignals an das mobile Sende-/Empfangsgerät.

2. Vorrichtung (10) nach Anspruch 1, wobei der eindeutige Code einem Verwürfelungscode oder einem Spreizcode entspricht.

3. Vorrichtung (10) nach Anspruch 1, wobei das Mittel zum Bilden (12) des Sendesignals betriebsfähig ist, um das Sendesignal zu bilden, so dass das Sendesignal Sendesymbole für eine Vielzahl von mobilen Sende-/Empfangsgeräten umfasst, wobei ein Teilsatz der Sendesymbole für jedes mobile Sende-/Empfangsgerät codiert wird durch Verwenden eines eindeutigen Codes, der jedem von der Vielzahl von mobilen Sende-/Empfangsgeräten zugeordnet ist.

4. Vorrichtung (10) nach Anspruch 1, wobei der Teilsatz von Sendesymbolen ein Sendesymbol umfasst.

5. Vorrichtung (10) nach Anspruch 2, wobei das Mittel zum Bilden (12) des Sendesignals betriebsfähig ist, um das Sendesignal basierend auf einem räumlichen Vorcodierungsschema vorzucodieren, und wobei das Mittel zum Senden (14) betriebsfähig ist, um das vorcodierte Sendesignal auf einer Vielzahl von Sendeantennen zu senden.

6. Vorrichtung (20) für einen Decoder eines Mobilkommunikationssystems, wobei die Vorrichtung (20) Folgendes umfasst:

   Mittel zum Empfangen (22) einer Vielzahl von Empfangssignalen von einer Vielzahl von mobilen Sende-/Empfangsgeräten, wobei die mobilen Sende-/Empfangsgeräte die Empfangssignale von einem Sender empfangen haben;
   Mittel zum Verarbeiten (24) der Vielzahl von Empfangssignalen basierend auf einem eindeutigen Code, der einem von der Vielzahl von mobilen Sende-/Empfangsgeräten zugeordnet ist, wobei das Mittel zum Verarbeiten (24) betriebsfähig ist, um ein verarbeitetes Empfangssignal für das eine mobile Sende-/Empfangsgerät basierend auf dem eindeutigen Code zu bestimmen, der dem einen mobilen Sende-/Empfangsgerät zugeordnet ist, wobei das verarbeitete Empfangssignal mindestens einen Teilsatz von decodierten Empfangssymbolen umfasst; und
   Mittel zum Bereitstellen (26) des verarbeiteten Empfangssignals für das eine mobile Sende-/Empfangsgerät.

7. Vorrichtung (20) nach Anspruch 6, wobei die Vielzahl von Empfangssignalen auf einem Sendesignal basiert, wobei das Sendesignal eine Vielzahl von Sendesymbolen umfasst, die an das mobile Sende-/Empfangsgerät zu senden sind, wobei ein Teilsatz der Sendesymbole codiert wird durch Verwenden eines eindeutigen Codes, der dem mobilen Sende-/Empfangsgerät zugeordnet ist, wobei das verarbeitete Empfangssignal eine Kombination der Empfangssignale von der Vielzahl mobiler Sende-/Empfangsgeräte umfasst, wobei Signale, die anderen mobilen Sende-/Empfangsgeräten zugeordnet sind als dem einen mobilen Sende-/Empfangsgerät, in den verarbeiteten Empfangssignalen verringert sind, verglichen mit der Vielzahl von Empfangssignalen.

8. Vorrichtung (20) nach Anspruch 6, wobei der eindeutige Code einem Verwürfelungscode oder einem Spreizcode entspricht.

9. Vorrichtung (20) nach Anspruch 6, wobei der eindeutige Code einem aus einer Menge von orthogonalen Spreizcodes entspricht, und wobei das Mittel zum Verarbeiten (24) betriebsfähig ist, um die Vielzahl von Empfangssignalen durch Verwenden des Spreizcodes des mobilen Sende-/Empfangsgerätes zu entspreizen, um das verarbeitete Empfangssignal für das mobile Sende-/Empfangsgerät zu erhalten.

10. Vorrichtung (20) nach Anspruch 6, wobei der eindeutige Code einem aus einer Menge von orthogonalen Verwürfelungscodes entspricht, und wobei das Mittel zum Verarbeiten (24) betriebsfähig ist, um die Vielzahl von Empfangssignalen durch Verwenden des Verwürfelungscodes des mobilen Sende-/Empfangsgerätes zu entschlüsseln, um das verarbeitete Empfangssignal für das mobile Sende-/Empfangsgerät zu erhalten.

11. Vorrichtung (20) nach Anspruch 6, wobei das Mittel zum Verarbeiten (24) weiterhin betriebsfähig ist, um gemeinsam Empfangssymbole für jedes aus der Vielzahl mobiler Sende-/Empfangsgeräte zu erfassen, und das Mittel zum Bereitstellen (26) betriebsfähig ist, um die erfassten Empfangssymbole für das mobile Sende-/Empfangsgerät als verarbeitetes Empfangssignal bereitzustellen.

12. Vorrichtung (20) nach Anspruch 6, wobei das Mittel zum Verarbeiten (24) weiterhin betriebsfähig ist, um gemeinsam Empfangssymbole basierend auf den codierten Sendesymbolen für jedes aus der Vielzahl mobiler Sende-/Empfangsgeräte zu erfassen, und wobei das Mittel zum Bereitstellen (26) betriebsfähig ist, um die erfassten Empfangssymbole, die auf den codierten Sendesymbolen basieren, zusammen mit einer nichterfassten Version der nichtcodierten Sendesymbole für das mobile Sende-/Empfangsgerät an das mobile Sende-/Empfangsgerät als verarbeitetes Empfangssignal bereitzustellen.

13. Verfahren für einen Sender eines Mobilkommunikationssystems, wobei das Verfahren Folgendes umfasst:

Bilden (32) eines Sendesignals, wobei das Sendesignal eine Vielzahl von Sendesymbolen umfasst, die an ein mobiles Sende-/Empfangsgerät zu senden sind, wobei ein Teilsatz der Sendesymbole codiert wird durch Verwenden eines eindeutigen Codes, der dem mobilen Sende-/Empfangsgerät zugeordnet ist;
Senden (34) des Sendesignals an das mobile Sende-/Empfangsgerät.

14. Verfahren für einen Decoder eines Mobilkommunikationssystems, wobei das Verfahren Folgendes umfasst:

Empfangen (42) einer Vielzahl von Empfangssignalen von einer Vielzahl von mobilen Sende-/Empfangsgeräten, wobei die mobilen Sende-/Empfangsgeräte die Empfangssignale von einem Sender empfangen haben;
Verarbeiten (44) der Vielzahl von Empfangssignalen basierend auf einem eindeutigen Code, der einem von der Vielzahl von mobilen Sende-/Empfangsgeräten zugeordnet ist;
Bestimmen (46) eines verarbeiteten Empfangssignals für das eine mobile Sende-/Empfangsgerät basierend auf dem eindeutigen Code, der dem einen mobilen Sende-/Empfangsgerät zugeordnet ist, wobei das verarbeitete Empfangssignal mindestens einen Teilsatz von decodierten Empfangssymbolen umfasst; und Bereitstellen (48) des verarbeiteten Empfangssignals für das eine mobile Sende-/Empfangsgerät.

15. Computerprogramm mit einem Programmcode zum Durchführen eines der Verfahren nach Anspruch 13 oder 14, wenn das Computerprogramm auf einem Computer oder Prozessor ausgeführt wird.

**Revendications**

1. Appareil (10) pour un émetteur d'un système de communication mobile, l'appareil (10) comprenant
des moyens de composition (12) d'un signal d'émission, le signal d'émission comprenant une pluralité de symboles d'émission à transmettre à un émetteur/récepteur mobile, dans lequel un sous-ensemble des symboles d'émission est codé en utilisant un code unique attribué à l'émetteur/récepteur mobile ;
des moyens de transmission (14) du signal d'émission à l'émetteur/récepteur mobile.

2. Appareil (10) selon la revendication 1, dans lequel le code unique correspond à un code de brouillage ou à un code d'étalement.

3. Appareil (10) selon la revendication 1, dans lequel les moyens de composition (12) du signal d'émission permettent de composer le signal d'émission de sorte que le signal d'émission comprenne des symboles d'émission pour une pluralité d'émetteurs/récepteurs mobiles, dans lequel un sous-ensemble des symboles d'émission pour chaque émetteur/récepteur mobile est codé en utilisant un code unique attribué à chacun parmi la pluralité d'émetteurs/récepteurs mobiles.

4. Appareil (10) selon la revendication 1, dans lequel le sous-ensemble de symboles d'émission comprend un symbole d'émission.

5. Appareil (10) selon la revendication 2, dans lequel les moyens de composition (12) du signal d'émission permettent de précoder le signal d'émission sur la base d'un schéma de précodage spatial, et dans lequel les moyens d'émission (14) permettent de transmettre le signal d'émission précodé sur une pluralité d'antennes d'émission.

6. Appareil (20) pour un décodeur d'un système de communication mobile, l'appareil (20) comprenant des moyens de réception (22) d'une pluralité de signaux de réception provenant d'une pluralité d'émetteurs/récepteurs mobiles, les émetteurs/récepteurs mobiles ayant reçu les signaux de réception provenant d'un émetteur ; des moyens de traitement (24) de la pluralité de signaux de réception sur la base d'un code unique attribué à un émetteur/récepteur mobile parmi la pluralité d'émetteurs/récepteurs mobiles, les moyens de traitement (24) permettant de déterminer un signal de réception traité pour l'émetteur/récepteur mobile sur la base du code unique attribué à l'émetteur/récepteur mobile, le signal de réception traité comprenant au moins un sous-ensemble de symboles de réception décodés ; et des moyens de fourniture (26) du signal de réception traité à l'émetteur/récepteur mobile.

7. Appareil (20) selon la revendication 6, dans lequel la pluralité de signaux de réception est basée sur un signal d'émission, le signal d'émission comprenant une pluralité de symboles d'émission à transmettre à l'émetteur/récepteur mobile, dans lequel un sous-ensemble des symboles d'émission est codé en utilisant un code unique attribué à l'émetteur/récepteur mobile, dans lequel le signal de réception traité comprend une combinaison des signaux de réception provenant de la pluralité d'émetteurs/récepteurs mobiles, dans lequel des signaux dédiés à d'autres émetteurs/récepteurs mobiles que l'émetteur/récepteur mobile sont réduits dans les signaux de réception traités par rapport à la pluralité de signaux de réception.

8. Appareil (20) selon la revendication 6, dans lequel le code unique correspond à un code de brouillage ou d'étalement.

9. Appareil (20) selon la revendication 6, dans lequel le code unique correspond à un code d'étalement orthogonal parmi un ensemble de codes d'étalement orthogonaux, et dans lequel les moyens de traitement (24) permettent de désétaler la pluralité de signaux de réception en utilisant le code d'étalement de l'émetteur/récepteur mobile pour obtenir le signal de réception traité pour l'émetteur/récepteur mobile.

10. Appareil (20) selon la revendication 6, dans lequel le code unique correspond à un code de brouillage orthogonal parmi un ensemble de codes de brouillage orthogonaux, et dans lequel les moyens de traitement (24) permettent de désembrouiller la pluralité de signaux de réception en utilisant le code de brouillage de l'émetteur/récepteur mobile pour obtenir le signal de réception traité pour l'émetteur/récepteur mobile.

11. Appareil (20) selon la revendication 6, dans lequel les moyens de traitement (24) permettent en outre de détecter conjointement des symboles de réception pour chaque émetteur/récepteur mobile parmi la pluralité d'émetteurs/récepteurs mobiles et les moyens de fourniture (26) permettent de fournir les symboles de réception détectés à l'émetteur/récepteur mobile comme signal de réception traité.

12. Appareil (20) selon la revendication 6, dans lequel les moyens de traitement (24) permettent en outre de détecter conjointement des symboles de réception sur la base des symboles d'émission codés pour chaque émetteur/récepteur mobile parmi la pluralité d'émetteurs/récepteurs mobiles et dans lequel les moyens de fourniture (26) permettent de fournir les symboles de réception détectés, qui sont basés sur les symboles d'émission codés, avec une version non détectée des symboles d'émission non codés pour l'émetteur/récepteur mobile à l'émetteur/récepteur mobile comme signal de réception traité.

13. Procédé pour un émetteur d'un système de communication mobile, le procédé comprenant les étapes suivantes composer (32) un signal d'émission, le signal d'émission comprenant une pluralité de symboles d'émission à transmettre à un émetteur/récepteur mobile, dans lequel un sous-ensemble des symboles d'émission est codé en utilisant un code unique attribué à l'émetteur/récepteur mobile ; transmettre (34) le signal d'émission à l'émetteur/récepteur mobile.

14. Procédé pour un décodeur d'un système de communication mobile, le procédé comprenant les étapes suivantes recevoir (42) une pluralité de signaux de réception provenant d'une pluralité d'émetteurs/récepteurs mobiles, les émetteurs/récepteurs mobiles ayant reçu les signaux de réception provenant d'un émetteur ; traiter (44) la pluralité de signaux de réception sur la base d'un code unique attribué à un émetteur/récepteur mobile parmi la pluralité d'émetteurs/récepteurs mobiles ; déterminer (46) un signal de réception traité pour l'émetteur/récepteur mobile sur la base du code unique attribué à l'émetteur/récepteur mobile, le signal de réception traité comprenant au moins un sous-ensemble de symboles de réception décodés ; et

fournir (48) le signal de réception traité à l'émetteur/récepteur mobile.

15. Programme informatique possédant un code de programme pour exécuter un des procédés selon la revendication 13 ou 14, lorsque le programme informatique est exécuté sur un ordinateur ou un processeur.

Fig. 1

Fig. 2

Fig. 3

Fig. 4

Alice

10

Bob

501

502

20

504

503

Eve

Eavesdropper
(Underdetermined
MLD)

Fig. 5

Uniquely and pseudo randomly select $s$-th user's scrambling codes
from a Walsh Hadamard matrix as $\{\mathbf{w}_s\} \in \mathbf{W}_{L_s \times L_s}$, with $L_s \geq S$

User 1

Synchronized
scrambling

User 2

... ...

... ...

... ...

... ...

User $S$

▌▌▌▌ 1 symbol scrambled by factor
$L_s$ for distributed detection

Ratio between scrambled symbols and
unscrambled symbols $R_s = 1/L_J$

Fig. 6

Fig. 7

**BS level**

BS selects the scrambling code $\mathbf{w}_s$ for $s$-th user, and transmits the user signals.

**Joint detector level**

Joint Processing

The joint detection unit descrambles $s$-th user's signal by $\mathbf{w}_s$, and forwards the signal component to $s$-th user.

$\mathbf{Y}$ and $\mathbf{H}$ matrix completely available

The joint detection unit detects all $S$ users' unscrambled signal jointly.

**User level**

Distributed Processing

Loop over $S$ users

The $s$-th user detects its own signal during the $L_s$ symbols interval.

Only part of $\mathbf{y}_s$ and $\mathbf{H}_s$ available for $s$-th user

The $s$-th user picks up scrambled and unscrambled symbols, and recovers its own signal.

Loop over $S$ users

End

Fig. 8

**BS level**

BS selects the scrambling code $\mathbf{w}_s$ for $s$-th user, and transmits the user signals.

**Joint detector level**

*Distributed Processing* with improved diversity order

The joint detector de-scrambles $s$-th user's signal by $\mathbf{w}_s$, and detects the signal component.

Loop over $S$ users

**Y** and **H** matrix completely available

*Joint Processing*

The joint detection unit detects all $S$ users' unscrambled signal jointly.

**User level**

Loop over $S$ users

The $s$-th user picks up scrambled and unscrambled symbols, and recovers its own signal.

End

Fig. 9

Fig. 10

Fig. 11

Fig. 12

```
┌─────────────────────┐
│                     │
│     Composing       │
│                     │╲╱ 32
└─────────────────────┘
          │
          │
          ▼
┌─────────────────────┐
│                     │
│    Transmitting     │
│                     │╲╱ 34
└─────────────────────┘
```

Fig. 13

```
┌─────────────────┐
│    Receiving    │ ⌇ 42
└─────────────────┘
         │
         ▼
┌─────────────────┐
│   Processing    │ ⌇ 44
└─────────────────┘
         │
         ▼
┌─────────────────┐
│   Determining   │ ⌇ 46
└─────────────────┘
         │
         ▼
┌─────────────────┐
│    Providing    │ ⌇ 48
└─────────────────┘
```

Fig. 14

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012096609 A1
- WO 2008133439 A1
- WO 2010088665 A1

**Non-patent literature cited in the description**

- **FOSCHINI, G.J. ; GANS, M.J.** On limits of wireless communications in a fading environment when using multiple antennas. *Wireless Personal Commun.,* March 1998, vol. 6 (3), 311-335
- **ALAMOUTI, S.M.** A simple transmit diversity technique for wireless communications. *IEEE J. Select. Areas Commun.,* October 1998, vol. 16 (8), 1451-1458
- **HERO, A.O.** Secure Space-Time Communication. *IEEE Trans. Inf. Theory,* December 2003, vol. 49 (12), 3235-3249
- **WYNER, A.D.** The wire-tap channel. *Bell Syst. Tech. J.,* 1975, vol. 54, 1355-1387
- **OZAROW, L.H. ; WYNER, A.D.** The wire-tap channel II. *Bell Syst. Tech. J.,* 1984, vol. 63, 2135-2157
- **KHISTI, A ; WOMELL, G. ; WIESEL, A. ; ELDAR, Y.** On the Gaussian MIMO Wiretap Channel. *Proc. of IEEE Int. Symp. Inform. Theory 2007 (ISIT'07),* June 2007, 2471-2475
- **OGGIER, F. ; HASSIBI, B.** The Secrecy Capacity of the MIMO Wiretap Channel. *Proc. of IEEE Int. Symp. Inform. Theory 2008 (ISIT'08),* July 2008, 524-528
- **LIU, RUOHENG ; POOR, H.V.** Secrecy Capacity Region of a Multiple-Antenna Gaussian Broadcast Channel With Confidential Messages. *IEEE Trans. Inf. Theory,* March 2009, vol. 55 (3), 1235-1249
- **GOEL, S. ; NEGI, R.** Guaranteeing Secrecy using Artificial Noise. *IEEE Trans. Wireless Commun.,* June 2008, vol. 7 (6), 2180-2189
- **ZHOU, XIANGYUN ; MCKAY, M.R.** Secure Transmission With Artificial Noise Over Fading Channels: Achievable Rate and Optimal Power Allocation. *IEEE Trans. Veh. Technol.,* October 2010, vol. 59 (8), 3831-3842
- **MUKHERJEE, A. ; SWINDLEHURST, A.L.** Robust Beamforming for Security in MIMO Wiretap Channels With Imperfect CSI. *IEEE Trans. Signal Process.,* January 2011, vol. 59 (1), 351-361
- **GERACI, G. ; YUAN, JINHONG ; COLLINGS, I.B.** Large System Analysis of the Secrecy Sum-Rates with Regularized Channel Inversion Precoding. *Proc. of IEEE Wireless Commun. Network. Conf. 2012 (WCNC' 12),* April 2012, 533-537
- **ZHU, XU ; MURCH, R.D.** Performance Analysis of Maximum Likelihood Detection in a MIMO Antenna System. *IEEE Trans. Commun.,* February 2002, vol. 50 (2), 187-191